(19) Europäisches Patentamt

European Patent Office

Office européen des brevets

(11) Veröffentlichungsnummer: **0 548 453 A2**

## (12) EUROPÄISCHE PATENTANMELDUNG

(21) Anmeldenummer: **92108865.4**

(22) Anmeldetag: **26.05.92**

(51) Int. Cl.⁵: **H04Q 11/00**

(30) Priorität: **20.12.91 DE 4142337**

(43) Veröffentlichungstag der Anmeldung:
**30.06.93 Patentblatt 93/26**

(84) Benannte Vertragsstaaten:
**DE FR GB IT NL**

(71) Anmelder: **SIEMENS AKTIENGESELLSCHAFT**
**Wittelsbacherplatz 2**
**W-8000 München 2(DE)**

(72) Erfinder: **Storck, Eckhard, Dr.**
**Argelsrieder Strasse 27**
**W-8000 München 71(DE)**
Erfinder: **Witte, Hans-Hermann, Dr.**
**Hippelstrasse 15**
**W-8000 München 82(DE)**

(54) **Schaltvorrichtung zum Schalten von Signalen an Eingängen auf Ausgänge und Koppelanordnungen zum Verkoppeln erster und zweiter Übertragungsmedien.**

(57) 2.1. Es sollen Koppelanordnungen zum Verkoppeln erster und zweiter Übertragungsmedien zum Übertragen von Signalen im Frequenz- oder Raummultiplex angegeben werden, die eine im Vergleich zu bekannten Koppelanordnungen wesentlich einfachere Architektur aufweisen.

2.2. Dazu werden die Koppelanordnungen mit einer neuartigen Schaltvorrichtung aus mehreren einstellbaren eingangsseitigen Frequenzkonvertern, einer Einrichtung zum Verteilen der Signale und doppelt einstellbaren ausgangsseitigen Frequenzkonvertern und/oder aus mehreren doppelt einstellbaren eingangsseitigen Frequenzkonvertern, einer Einrichtung zum Verteilen der Signale und einstellbaren ausgangsseitigen Frequenzkonvertern aufgebaut. Diese Koppelanordnungen sind bekannten Anordnungen vom Clos-Typ völlig gleichwertig, jedoch wesentlich einfacher aufgebaut. Ein einfacherer Aufbau kann auch bei einer bekannten Koppelanordnung vom Clos-Typ dadurch erreicht werden, daß Shared-Medium-Schalter zweierlei Typs verwendet werden. 2.3. Anwendung für elektrische und optische Vermittlungssysteme

FIG 1

EP 0 548 453 A2

Die Erfindung betrifft eine Schaltvorrichtung zum Schalten von Signalen an Eingängen auf Ausgänge nach dem Oberbegriff des Anspruchs 1 und Koppelanordnungen zum Verkoppeln erster und zweiter Übertragungsmedien.

Koppelanordnungen zum Verkoppeln einer Anzahl erster Übertragungsmedien mit einer Anzahl zweiter Übertragungsmedien sind bekannt.

Beispielsweise sind aus E. Hölzler, H. Holzwart: "Pulstechnik", Bd. 2; Springer Verlag, 1984, S. 378, mehrstufige Koppelanordnungen aus reinen Zeitstufen bekannt. Analog dazu kann man im OFDM-Bereich (OFDM steht für Optical frequency division multiplexing) solche Anordnungen ausschließlich aus Frequenzstufen aufbauen. Ein Beispiel dafür ist eine bekannte Architektur von Fujiwara et al (siehe M.Fujiwara et al: A Coherent Photonic Wavelength Devision Switching System For Broadband Networks, Journal of Lightwave Technology, Vol. 8, No. 3, 1990, S. 416-422). Diese Koppelanordnung ist vom Clos-Typ (siehe B.S.T.J. Bd. 32, S. 406-424) und die einzelnen Schaltstufen verwenden Frequenzlagen-Interchanger. Sie ist vorwiegend dadurch aufwendig, daß viel öfter als nötig zwischen Raum- und Frequenzmultiplexen gewechselt wird.

Die Erfindung zielt generell ab auf die Bereitstellung von Koppelanordnungen mit wesentlich einfacherer Architektur.

Mit der im Anspruch 1 und/oder 2 angegebenen Erfindung lassen sich besonders einfach aufgebaute Koppelanordnungen bereitstellen, die im Anspruch 7 und Anspruch 8 angegeben sind und im wesentlichen nur mit erfindungswesentlichen Schaltvorrichtungen nach Anspruch 1 und/oder Anspruch 2 aufgebaut werden können, wobei überdies der Vorteil besteht, daß diese Schaltvorrichtungen gleich ausgebildet sein können und in gewisser Weise sogar sein müssen, so daß eine solche Koppelanordnung im wesentlichen mit einem einzigen Schaltungstyp, z.B. entweder mit dem Typ nach Anspruch 1 oder dem Typ nach Anspruch 2 aufgebaut werden kann. Jedoch kann eine solche Koppelanordnung auch mit beiden Typen aufgebaut werden, so daß sie beide Typen enthält.

Bevorzugte und vorteilhafte Ausgestaltungen der erfindungsgemäßen Schaltvorrichtung nach Anspruch 1 gehen aus den Ansprüchen 3 und 4 hervor. Bevorzugte und vorteilhafte Ausgestaltungen der erfindungsgemäßen Schaltvorrichtung nach Anspruch 2 gehen aus den Ansprüchen 5 und 6 hervor.

Die mit erfindungsgemäßen Schaltvorrichtungen aufgebaute Koppelanordnung nach Anspruch 7 ist für Signalübertragung auf den Übertragungsmedien im Frequenzmultiplex ausgelegt und zeichnet sich durch ihre besondere Einfachheit aus.

Die mit erfindungsgemäßen Schaltvorrichtungen aufgebaute Koppelanordnung nach Anspruch 8 ist für Signalübertragung auf den Übertragungsmedien im Raummulitplex ausgelegt und ist ebenfalls sehr einfach aufgebaut, insbesondere im Vergleich zu einer bekannten dreistufigen Koppelanordnung für Raummultiplex vom Clos-Typ.

Bevorzugte und vorteilhafte Ausgestaltungen dieser Koppelanordnung nach Anspruch 8 gehen aus den Ansprüchen 9 bis 12 hervor.

Mit der im Anspruch 13 angegebenen Erfindung ist ein weiterer Weg aufgezeigt, auf dem Koppelanordnungen mit wesentlich einfacherer Architektur im Vergleich zu bekannten dreistufigen Koppelanordnungen vom Clos-Typ erreicht werden können.

Bevorzugte und vorteilhafte Ausgestaltungen der erfindungswesentlichen Shared-Medium-Schalter dieser Koppelanordnung gehen aus den Ansprüchen 14 bis 22 hervor.

Alle erfindungsgemäßen Koppelanordnungen haben den Vorteil, daß sie trotz ihrer wesentlich einfacheren Architektur alle Vorteile der bekannten mehrstufigen Koppelanordnungen vom Clos-Typ aufweisen, insbesondere die Eigenschaft, daß unter der Bedingung $k' \leq 2k-1$ innere Blockierungen ausgeschlossen sind. Insbesondere ist bei ihnen vorteilhafterweise die aus Donald K. Wilson: An new Architecture for Packaging Wide Communication Equipment Using A 3D, Orthogonal Edge - two Edge Topology, IEEE, 1988, Seiten 13.5.1-13.6.1 hervorgehende orthogonale Topologie für die Zusammenschaltung von Stufen oder Schaltungsteilen auf einfache Weise realisierbar.

Die Erfindung wird anhand der Figuren in der nachfolgenden Beschreibung näher erläutert. Es zeigen:

Figur 1
eine mit erfindungsgemäßen Schaltvorrichtungen nach Anspruch 1 aufgebaute erfindungsgemäße Koppelanordnung zum Verkoppeln erster und zweiter Übertragungsmedien im Frequenzmultiplex,

Figur 1a
eine mit erfindungsgemäßen Schaltvorrichtungen nach Anspruch 2 aufgebaute Koppelanordnung zum Verkoppeln erster und zweiter Übertragungsmedien im Frequenzmultiplex,

Figur 2
eine mit erfindungsgemäßen Schaltvorrichtungen nach Anspruch 1 aufgebaute Koppelanordnung zum Verkoppeln erster und zweiter Übertragungsmedien im Raummultiplex,

Figur 2a
eine mit erfindungsgemäßen Schaltvorrichtungen nach Anspruch 2 aufgebaute Koppelanordnung zum Verkoppeln erster und zweiter Übertragungsmedien im Raummultiplex,

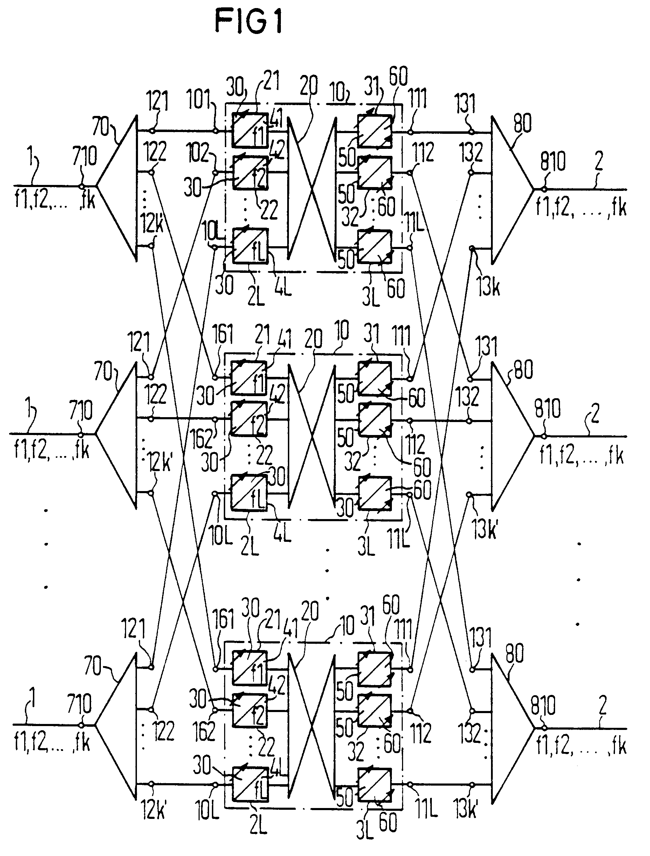

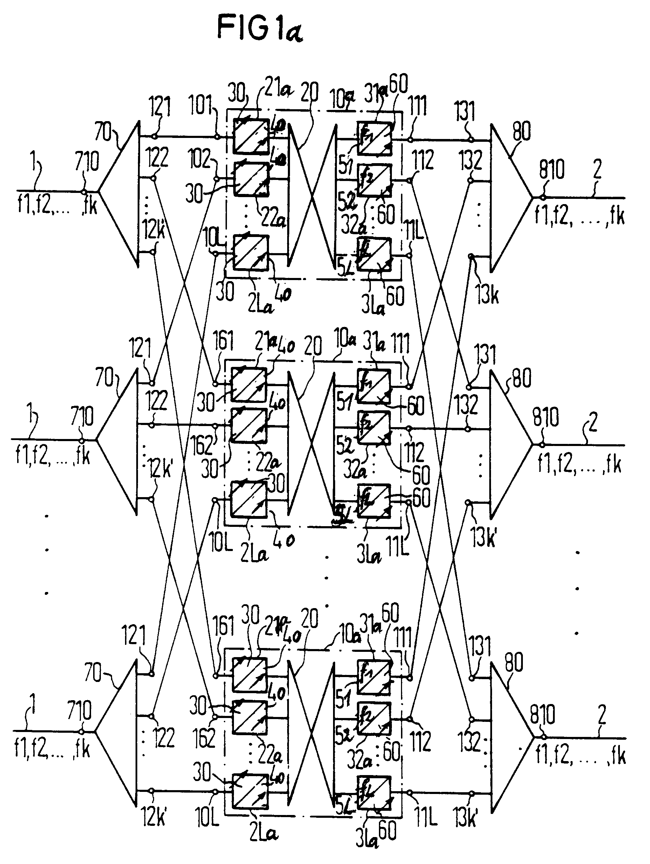

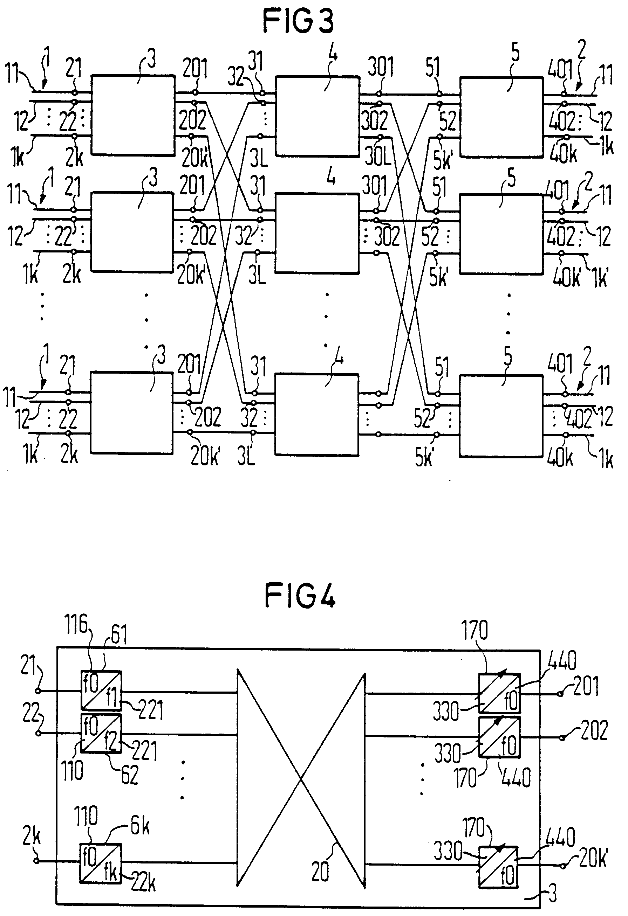

Figur 3
eine mit Shared-Medium-Schaltern aufgebaute erfindungsgemäße aufgebaute Koppelanordnung nach dem Groß-Prinzip,
Figuren 4 und 5
eine Ausführung des Shared-Medium-Schalters jeder ersten bzw. zweiten Schalteinrichtung der Koppelanordnung nach Figur 3,
Figur 6
eine Ausführung des Shared-Medium-Schalters jeder dritten Schalteinrichtung der Koppelanordnung nach Figur 3 und
Figur 7
in perspektivischer Darstellung eine Koppelanordnung nach Figur 1 mit orthogonaler Topologie zur Ankopplung der eingangs- und ausgangsseitigen Einrichtungen an die Einrichtung zum leistungsmäßigen Verteilen der Signale auf die Ausgänge.

In den Figuren sind wahlweise einstellbare Signalempfänger und Signalsender durch einen schräg nach oben gerichteten Pfeil gekennzeichnet. Bei Signalempfängern und Signalsendern mit fest zugeordneter Frequenz f0, f1, f2, ..., fL ist diese Frequenz eingezeichnet.

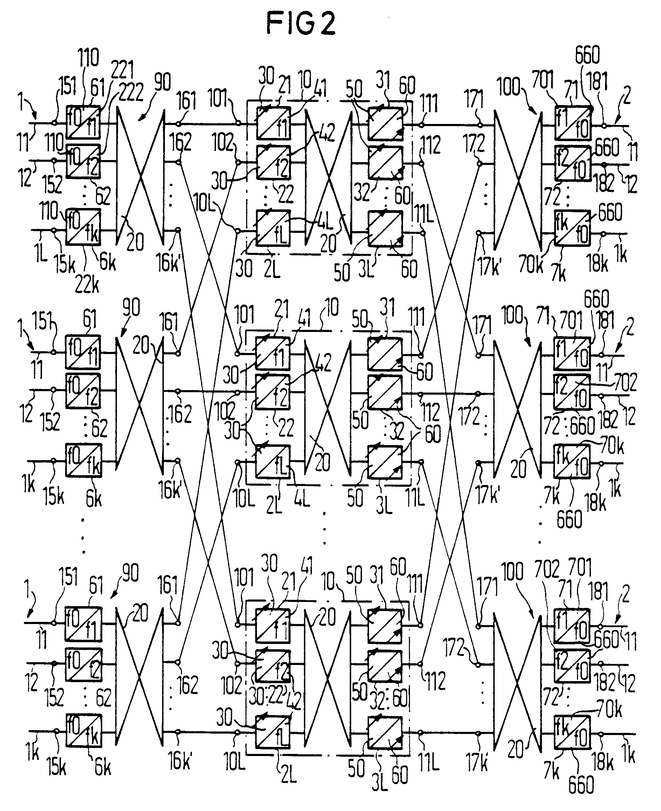

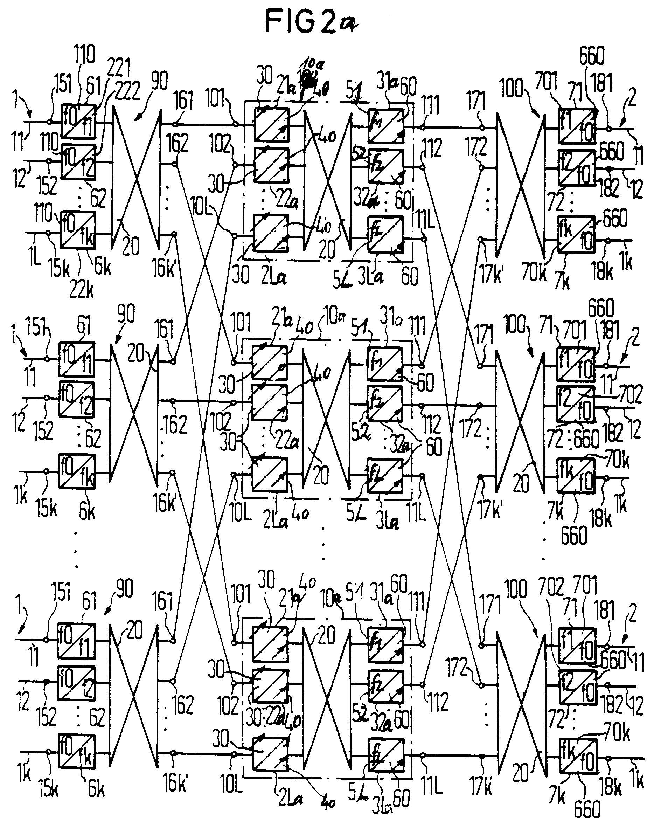

Jede Koppelanordnung nach Figur 1 und 2 ist mit mehreren gleich ausgebildeten erfindungsgemäßen Schaltvorrichtungen 10 nach Anspruch 1 aufgebaut, die zunächst beschrieben werden.

Jede Schaltvorrichtung 10 weist L = 1, 2, 3, ... Eingänge 101 bis 10L und L Ausgänge 111 bis 11L auf. Jedem Eingang ist je eine Frequenz aus L verschiedenen, aus einer Anzahl k>L vorbestimmter verschiedener Frequenzen ausgewählten Frequenzen aufgrund einer vorbestimmten festen Verteilung dieser ausgewählten Frequenzen auf die verschiedenen Eingänge dieser Schaltvorrichtung 10 fest zugeordnet.

Im Beispiel der Figuren 1 und 2 sind speziell die Frequenzen f1, f2, ..., fL ausgewählt und in dieser Reihenfolge auf die verschiedenen Eingänge 101, 102, ..., 10L verteilt, so daß dem Eingang 101 die ausgewählte Frequenz f1, dem Eingang 102 die ausgewählte f2 usw. und schließlich dem Eingang 10L die ausgewählte Frequenz fL fest zugeordnet ist.

Die Erfindung ist nicht auf diese spezielle Auswahl und Verteilung der ausgewählten Frequenzen auf die Eingänge beschränkt. Die ausgewählten Frequenzen können jede beliebige aus L verschiedenen vorbestimmten Frequenzen bestehende Teilmenge der Gesamtmenge der vorbestimmten Frequenzen f1, f2, ..., fk sein. Ebenso kann die vorbestimmte Verteilung der L ausgewählten Frequenzen auf die verschiedenen Eingänge beliebig gewählt werden.

Pro Eingang 101 bis 10L ist je ein einstellbarer eingangsseitiger Frequenzkonverter 21, 22, ..., 2L vorgesehen, der ein diesem Eingang zugeführtes Signal auf einer beliebigen der vorbestimmten Frequenzen f1 bis fk in ein diesem Signal gleiches Signal auf der diesem Eingang zugeordneten festen Frequenz umwandelt, wenn dieser eingangsseitige Frequenzkonverter auf die vorbestimmte Frequenz dieses zugeführten Signals eingestellt ist.

Mit 20 ist eine Einrichtung zum leistungsmäßigen Verteilen jedes der durch einen eingangsseitigen Frequenzkonverter 21 bis 2L frequenzmäßig umgewandelten Signale auf die verschiedenen Ausgänge 111 bis 11L bezeichnet. Diese Einrichtung 20 kann beispielsweise ein Sternkoppler oder Signalmischer sein.

Pro Ausgang 111 bis 11L ist je ein zweifach einstellbarer ausgangsseitiger Frequenzkonverter 31, 32, ..., 3L vorgesehen, der aus dem diesem Ausgang aufgrund der leistungsmäßigen Verteilung der Signale zugeteilten Leistungsanteil ein Signal auf einer der verschiedenen ausgewählten Frequenzen nur dann selektiert, wenn dieser ausgangsseitige Frequenzkonverter einerseits wahlweise auf diese ausgewählte Frequenz eingestellt ist und der das selektierte Signal auf dieser eingestellten einen ausgewählten Frequenz in ein diesem selektierten Signal gleiches Signal auf einer der verschiedenen vorbestimmten Frequenzen f1 bis fk umwandelt, auf die dieser ausgangsseitige Frequenzkonverter andererseits wahlweise gerade eingestellt ist.

Jeder eingangsseitige Frequenzkonverter 31 bis 3L ist vorzugsweise so ausgebildet, daß er einen wahlweise auf jede der verschiedenen bestimmten Frequenzen f1 bis fk abstimmbaren Signalempfänger 30 zum Detektieren eines Signals auf der Frequenz, auf die der Signalempfänger 30 gerade abgestimmt ist, aufweist, sowie einen Signalsender 41, 42, ..., 4L, der in Abhängigkeit von diesem detektierten Signal ein gleiches Signal auf der ausgewählten Frequenz erzeugt, die dem zu diesem eingangsseitigen Frequenzkonverter gehörenden Eingang fest zugeordnet ist.

Jeder ausgangsseitige Frequenzkonverter 31 bis 3L ist so ausgebildet, daß er einen wahlweise auf jede der verschiedenen ausgewählten Frequenzen abstimmbaren Signalempfänger 50 zum Detektieren eines Signals auf der ausgewählten Frequenz, auf die dieser Signalempfänger 50 gerade abgestimmt ist, aufweist, sowie einen wahlweise auf jede der vorbestimmten Frequenzen f1 bis fk einstellbaren Signalsender 60, der in Abhängigkeit von diesem detektierten Signal auf dieser ausgewählten Frequenz ein diesem detektierten Signal gleiches Signal auf der vorbestimmten Frequenz erzeugt, auf die dieser Signalsender gerade eingestellt ist.

Jede Koppelanordnung nach Figur 1a und 2a unterscheidet sich von der Koppelanordnung nach Figur 1 bzw. 2 lediglich dadurch, daß gleich ausgebildete erfindungsgemäße Schaltvorrichtungen 10a nach Anspruch 2 anstelle der Schaltvorrichtungen 10 nach Anspruch 1 verwendet sind.

Jede Schaltvorrichtung 10a weist L = 1, 2, 3, ... Eingänge 101 bis 10L und L Ausgänge 111 bis 11L auf. Im unterschied zur Schaltvorrichtung 10 ist jedem Ausgang je eine Frequenz aus L verschiedenen, aus einer Anzahl k>L vorbestimmter verschiedener Frequenzen ausgewählten Frequenzen aufgrund einer vorbestimmten festen Verteilung dieser ausgewählten Frequenzen auf die verschiedenen Ausgänge dieser Schaltvorrichtung 10a fest zugeordnet.

Im Beispiel der Figuren 1a und 2a sind speziell die Frequenzen f1, f2, ..., fL ausgewählt und in dieser Reihenfolge auf die verschiedenen Ausgänge 111, 112, ..., 11L verteilt, so daß dem Ausgang 111 die ausgewählte Frequenz f1, dem Ausgang 112 die ausgewählte f2 usw. und schließlich dem Ausgang 11L die ausgewählte Frequenz fL fest zugeordnet ist.

Die Erfindung ist nicht auf diese spezielle Auswahl und Verteilung der ausgewählten Frequenzen auf die Ausgänge beschränkt. Die ausgewählten Frequenzen können jede beliebige aus L verschiedenen vorbestimmten Frequenzen bestehende Teilmenge der Gesamtmenge der vorbestimmten Frequenzen f1, f2, ..., fk sein. Ebenso kann die vorbestimmte Verteilung der L ausgewählten Frequenzen auf die verschiedenen Ausgänge beliebig gewählt werden.

Pro Eingang 101 bis 10L der Schaltvorrichtung 10a ist je ein doppelt einstellbarer eingangsseitiger Frequenzkonverter 21a, 22a, ..., 2aL vorgesehen, der ein diesem Eingang 101 bis 10L zugeführtes Signal auf einer beliebigen der vorbestimmten Frequenzen f1 bis fk nur dann selektiert, wenn dieser eingangsseitige Frequenzkonverter 21a bis 22a einerseits wahlweise auf die vorbestimmte Frequenz f1 bis fk dieses zugeführten Signals eingestellt ist, und das selektierte Signal auf dieser eingestellten vorbestimmten Frequenz in ein diesem selektierten Signal entsprechendes Signal auf einer der verschiedenen ausgewählten Frequenzen f1 bis fL umwandelt, auf die dieser eingangsseitige Frequenzkonverter 21a bis 2La andererseits wahlweise eingestellt ist.

Mit 20 ist eine Einrichtung zum leistungsmäßigen Verteilen jedes der durch einen eingangsseitigen Frequenzkonverter 21a bis 2La frequenzmäßig umgewandelten Signale auf die verschiedenen Ausgänge 111 bis 11L bezeichnet. Diese Einrichtung 20 kann beispielsweise ein Sternkoppler oder Signalmischer sein.

Pro Ausgang 111 bis 11L ist je ein einstellbarer ausgangsseitiger Frequenzkonverter 31a, 32a, ..., 3La vorgesehen, der aus dem diesem Ausgang aufgrund der leistungsmäßigen Verteilung der Signale zugeteilten Leistungsanteil ein Signal auf der diesem Ausgang fest zugeordneten ausgewählten Frequenz selektiert, wenn die Frequenz dieses Signals mit der diesem Ausgang fest zugeordneten ausgewählten Frequenz übereinstimmt, und der dieses selektierte Signal auf dieser ausgewählten Frequenz in ein diesem selektierten Signal entsprechendes oder gleiches Signal auf einer der verschiedenen vorbestimmten Frequenzen f1 bis fk umwandelt, auf die dieser ausgangsseitige Frequenzkonverter andererseits wahlweise gerade eingestellt ist.

Jeder zweifach einstellbare eingangsseitige Frequenzkonverter 31a bis 3La ist vorzugsweise so ausgebildet, daß er einen wahlweise auf jede der verschiedenen bestimmten Frequenzen f1 bis fk abstimmbaren Signalempfänger 30 zum Detektieren eines Signals auf der Frequenz, auf die der Signalempfänger 30 gerade abgestimmt ist, aufweist, sowie einen wahlweise auf jede der ausgewählten Frequenzen einstellbaren Signalsender 40, der in Abhängigkeit von diesem detektierten Signal auf dieser vorbestimmten Frequenz ein gleiches Signal auf der ausgewählten Frequenz erzeugt, auf dieser Signalsender 40 gerade eingestellt ist.

Jeder ausgangsseitige Frequenzkonverter 31a bis 3La ist so ausgebildet, daß er einen auf die dem zu diesem Frequenzkonverter gehörenden Ausgang fest zugeordnete ausgewählte Frequenz abgestimmten Signalempfänger 51 bis 5L zum Detektieren eines Signals auf dieser ausgewählten Frequenz und einen wahlweise auf jede der vorbestimmten Frequenzen f1 bis fk einstellbaren Signalsender 60 aufweist, der in Abhängigkeit von diesem detektierten Signal auf dieser ausgewählten Frequenz ein diesem detektierten Signal gleiches Signal auf der vorbestimmten Frequenz erzeugt, auf die dieser Signalsender gerade eingestellt ist.

Mit erfindungsgemäßen Schaltvorrichtungen 10 und 10a lassen sich vorteilhaft die einfach aufgebauten Koppelanordnungen zum Verkoppeln von maximal L ersten Übertragungsmedien und maximal L zweiten Übertragungsmedien aufbauen. Sind weniger als L erste Übertragungsmedien und/oder weniger als L zweite Übertragungsmedien zu verkoppeln, können die Schaltvorrichtungen mit L Eingängen und L Ausgängen ebenso gut verwendet werden, indem nur so viele der Ein- und Ausgänge benutzt werden, wie erste bzw. zweite Übertragungsleitungen vorhanden sind, und die übrigen Eingänge und Ausgänge unbenutzt bleiben oder fortgelassen werden.

Die Koppelanordnung nach Figur 1 bzw. 1a ist für L erste und L zweite Übertragungsmedien 1 und 2 bestimmt, auf denen Signale im Frequenzmultiplex übertragen werden, und zwar auf den k = 1, 2, 3, .. verschiedenen vorbestimmten Frequenzen f1, f2, ..., fk, und ist mit k' = 1, 2, 3, ... solchen erfindungsgemäßen Schaltvorrichtungen 10 bzw. 10a mit jeweils L Eingängen und L Ausgängen aufgebaut. Bei dieser Koppelanordnung nach Figur 1 ist pro erstem Übertragungsmedium je eine eingangsseitige Einrichtung 70 mit einem Eingang 710 und mit einer der Anzahl k' der Schaltvorrichtungen 10 bzw. 10a gleichen Anzahl k' Ausgängen 121, 122, ..., 12k' zum leistungsmäßigen Verteilen jedes dem Eingang 710 dieser Einrichtung 70 auf diesem ersten Übertragungsmedium 1 zugeführten Signals auf die Ausgänge 121 bis 12k' dieser Einrichtung 70 vorgesehen.

Jede der k' Schaltvorrichtungen 10 bzw. 10a weist, wie schon angedeutet, soviele Eingänge 101 bis 10L und soviele Ausgänge 111 bis 12L auf, wie erste bzw. zweite Übertragungsmedien 1 bzw. 2 vorhanden sind, d.h. jeweils L Eingängen und jeweils L Ausgänge.

Für alle k' Schaltvorrichtungen 10 bzw. 10a sind überdies die gleichen L ausgewählten Frequenzen zu wählen, wobei überdies die vorbestimmte Verteilung dieser ausgewählten Frequenzen auf die verschiedenen Eingänge jeder Schaltvorrichtung 10 bzw. 10a bei allen k' Schaltvorrichtungen 10 bzw. 10a gleich zu wählen ist. Im Beispiel nach Figur 1 bzw. 1a sind die ausgewählten Frequenzen f1, f2, ..., fL gewählt, die bei allen k' Schaltvorrichtungen 10 bzw. 10a beispielsweise in dieser Reihenfolge auf die Eingänge 101, 102, ... bzw. 10L verteilt sind. Pro zweitem Übertragungsmedium ist je eine ausgangsseitige Einrichtung 80 mit einer Anzahl k' der Schalvorrichtung 10 bzw. 10a gleichen Anzahl k' Eingängen 131, 132, ..., 13k' und einem Ausgang 810 zum Übertragen von diesen Eingängen 131 bis 13k' zugeführten Signalen auf den Ausgang 810 dieser Einrichtung 80 vorgesehen, wobei dieses zweite Übertragungsmedium 2 an diesen Ausgang 810 anschließbar ist.

Die Ausgänge 121, 122, ..., 12k' jeder eingangsseitigen Einrichtung 70 sind mit allen k' Schaltvorrichtungen 10 bzw. 10a derart verbunden, daß jeder Ausgang dieser eingangsseitigen Einrichtung 70 mit einem Eingang einer Schaltvorrichtung 10 bzw. 10a und jeder Eingang jeder Schaltvorrichtung 10 bzw. 10a mit einem Ausgang einer eingangsseitigen Einrichtung 70 verbunden ist, beispielsweise so, wie in Figur 1 bzw. 1a dargestellt.

Andererseits sind die Eingänge 131, 132, ..., 13k' jeder ausgangsseitigen Einrichtung 80 mit allen Schaltvorrichtungen 10 bzw. 10a derart verbunden, daß jeder dieser Eingänge mit einem Ausgang 111 bis 11L einer Schaltvorrichtung 10 bzw. 10a und jeder Ausgang jeder Schaltvorrichtung 10 bzw. 10a mit einem Eingang einer ausgangsseitigen Einrichtung 80 verbunden ist, beispielsweise so wie in Figur 1 bzw. 1a dargestellt ist.

Die Koppelanordnung nach Figur 2 bzw. 2a ist für L erste und L zweite Übertragungsmedien 1 und 2 bestimmt, auf denen Signale im Raummultiplex übertragen werden. Dazu weist jedes erste und jedes zweite Übertragungsmedium 1 bzw. 2 je eine der Anzahl k der vorbestimmten Frequenzen f1 bis fk gleiche Anzahl k Kanäle 11, 12, ..., 1k zum Übertragen von raummäßig getrennten Signalen auf einer gemeinsamen Trägerfrequenz f0 auf.

Die Koppelanordnung nach Figur 2 bzw. 2a unterscheidet sich von der Koppelanordnung nach Figur 1 bzw. 1a lediglich darin, daß jede eingangsseitige Einrichtung 70 der Koppelanordnung nach Figur 1 bzw. Figur 1a bei der Koppelanordnung nach Figur 2 bzw. 2a durch eine eingangsseitige Schalteinrichtung 90, und jede ausgangsseitige Einrichtung 80 der Koppelanordnung nach Figur 1 bzw. 1a bei der Koppelanordnung nach Figur 2 bzw. 2a durch eine ausgangsseitige Schalteinrichtung 100 ersetzt ist. Alles übrige ist bei beiden Koppelanordnungen nach Figur 1 bzw. 1a und Figur 2 bzw. 2a gleich.

Jede eingangsseitige Schalteinrichtung 90 weist eine der Zahl k der Kanäle gleiche Anzahl k Eingänge 151, 152, ..., 15k und eine der Anzahl k' der Schaltvorrichtungen 10 bzw. 10a gleiche Anzahl k' Ausgänge 161, 162, ..., 16k' auf und ist derart ausgebildet, daß jedem der Eingänge 151 bis 15k aufgrund einer für diese eingangsseitige Schalteinrichtung 90 vorbestimmten Verteilung der verschiedenen vorbestimmten Frequenzen f1 bis fk je eine dieser vorbestimmten Frequenzen fest zugeordnet ist und jedes einem Eingang 151 bis 15k zugeführte Signal auf der gemeinsamen Trägerfrequenz f0 in ein diesem Signal gleiches Signal auf der diesem Eingang fest zugeordneten Frequenz transformierbar und leistungsmäßig auf die Ausgänge 161 bis 16k' verteilbar ist. Die Verteilung der vorbestimmten Frequenzen f1 bis fk auf die verschiedenen Eingänge 151 bis 15k jeder eingangsseitigen Schalteinrichtung 90 kann für alle diese Schalteinrichtungen 90 gleich oder für jede Schalteinrichtung 90 individuell und damit auch verschieden voneinander gewählt werden. Beispielsweise sind in der Figur 2 die vorbestimmten Frequenzen f1, f2, ..., fk bei jeder eingangsseitigen Schalteinrichtung 90 in dieser Reihenfolge auf die Eingänge 151, 152, ..., bzw. 15k verteilt und damit bei allen diesen Schalteinrichtungen 90 gleich verteilt.

Die k' Ausgänge 161 bis 16k jeder ausgangsseitigen Schalteinrichtung 90 sind mit allen k' Schaltvorrichtungen 10 bzw. 10a genauso verbunden, wie die Ausgänge 121 bis 12k' jeder eingangsseitigen Einrichtung 70 der Koppelanordnung nach Figur 1 bzw. 1a.

Jede ausgangsseitige Schalteinrichtung 100 weist eine der Anzahl k' der Schaltvorrichtungen 10 bzw. 10a gleiche Anzahl k' Eingänge 171, 172, ...,

17k' und eine der Zahl k der Kanäle gleiche Anzahl k Ausgänge 181, 182, ..., 18k auf und ist derart ausgebildet, daß jedes einem Eingang 171 bis 17k' zugeführte Signal auf einer der verschiedenen vorbestimmten Frequenzen f1 bis fk leistungsmäßig auf die Ausgänge 181 bis 18k verteilbar ist, wobei jedem Ausgang aufgrund einer für diese ausgangsseitige Schalteinrichtung 100 vorbestimmten Verteilung der verschiedenen vorbestimmten Frequenzen f1 bis fk je eine dieser Frequenzen fest zugeordnet ist, und wobei aus dem jedem Ausgnag 181 bis 18k jeder ausgangsseitigen Schalteinrichtung 100 aufgrund der leistungsmäßigen Verteilung der Signale zugeteilte Leistungsanteil ein Signal auf der diesem Ausgang fest zugeordneten vorbestimmten Frequenz selektierbar und in ein diesem Signal gleiches Signal auf der gleichen Trägerfrequenz f0 transformierbar ist.

Die k' Eingänge 171 bis 17k' jeder ausgangsseitigen Schalteinrichtung 100 sind mit allen Schalteinrichtungen 10 bzw. 10a genauso verbunden, wie die Eingänge 131 bis 13k' jeder ausgangsseitigen Einrichtung 80 der Koppelanordnung nach Figur 1 bzw. 1a.

Vorzugsweise weist jede eingangsseitige Schalteinrichtung 90 pro Eingang 151, 152, ..., 15k je einen eingangsseitigen Frequenzkonverter 61, 62, ..., 6k zum Empfang eines diesem Eingang zugeführten Signals auf der gemeinsamen Trägerfrequenz f0 in ein diesem Signal gleiches Signal auf, der diesem Eingang fest zugeordneten vorbestimmten Frequenz und eine Einrichtung 20 zum leistungsmäßigen Verteilen jedes durch einen eingangsseitigen Frequenzkonverter 61, 62, ..., 6k auf eine vorbestimmte Frequenz gebrachten Signals auf die Ausgänge 161 bis 16k dieser eingangsseitigen Schalteinrichtung 90 auf.

Jeder eingangsseitige Frequenzkonverter 61 bis 6k der eingangsseitigen Schalteinrichtung 90 weist vorzugsweise einen auf die gemeinsame Trägerfrequenz f0 abgestimmten Signalempfänger 110 zum Detektieren eines zugeführten Sginals auf dieser Trägerfrequenz f0 und einen Signalsender 221, 222, ..., 22k auf, der in Abhängigkeit von dem detektierten Signal auf dieser Trägerfrequenz f0 ein diesem detektierten Signal gleiches Signal auf der dem zu diesem eingangsseitigen Frequenzkonverter gehörigen Eingang 151, 152, ..., bzw. 15k der eingangsseitigen Schalteinrichtung 90 fest zugeordneten vorbestimmten Frequenz erzeugt. Jede ausgangsseitige Schalteinrichtung 100 weist vorzugsweise eine Einrichtung 20 zum leistungsmäßigen Verteilen jedes einem Eingang 171 bis 17k dieser ausgangsseitigen Schalteinrichtung 100 zugeführten Signals auf jeder der verschiedenen vorbestimmten Frequenzen f1 bis fk' dieser ausgangsseitigen Schalteinrichtung 100 zugeführten Signals auf jeder der verschiedenen vorbestimmten Frequenzen f1 bis fk auf die Ausgänge 181 bis 18k dieser ausgangsseitigen Schalteinrichtung 100 und pro Ausgang 181, 182, ... bzw. 18k dieser ausgangsseitigen Schalteinrichtung 100 je einen ausgangsseitigen Frequenzkonverter 71, 72, ... bzw. 7k zum Empfang eines diesem Ausgang durch die leistungsmäßige Verteilung der Signale zugeteilten Leistungsanteils, Selektieren eines eines Signals auf der diesem Ausgang fest zugeordneten vorbestimmten Frequenz aus dem zugeteilten Leistungsanteil und Transformieren dieses selektierten Signals auf dieser Frequenz in ein diesem Signal entsprechendes Signal auf der gemeinsamen Trägerfrequenz f0 auf.

Dabei weist ein ausgangsseitiger Frequenzkonverter 71 bis 7k vorzugsweise einen auf die zu diesem ausgangsseitigen Frequenzkonverter gehörenden Ausgang der ausgangsseitigen Schalteinrichtung 100 fest zugeordneten vorbestimmten Frequenz abgestimmten Signalempfänger 701, 702, ... bzw. 70k zum Detektieren eines zugeführten Signals aus dieser vorbestimmten Frequenz und einen Signalsender 710 auf, der in Abhängigkeit von dem detektierten Signal auf dieser vorbestimmten Frequenz ein diesem detektierten Sginal gleiches Signal auf der gemeinsamen Trägerfrequenz f0 erzeugt.

Die Koppelanordnungen nach den Figuren 1 bzw. 1a und 2 bzw. 2a sind im wesentlichen alle aktiven Komponenten in der Mitte zu den erfindungsgemäßen Schaltvorrichtungen 10 bzw. 10a zusammengefaßt, die unter sich identisch sind, so daß die gesamte Anordnung mit diesem einzigen Bauelement-Typ aufgebaut werden kann. Darüberhinaus muß dieses Bauelement nur für eine einzige Stufe und daher k'-fach zur Verfügung stehen.

Eine erfindungsgemäße Koppelanordnung nach Figur 1 bzw. 1a mit der Besonderheit k = k' = L ist ein in den Komponenten stark reduziertes Äquivalent zu der obengenannten bekannten Koppelanordnung vom Clos-Typ nach Fujiwara.

Die in der Figur 3 in Form eines Blockschaltbildes dargestellte Koppelanordnung zur Verkopplung einer Anzahl L erster Übertragungsmedien 1 mit der gleichen Anzahl L zweiter Übertragungsmedien ist eine dreistufige Koppelanordnung vom Clos-Typ, wobei jedes erste Übertragungsmedium 1 und jedes zweite Übertragungsmedium 2 jeweils die gleiche Zahl k raummäßig getrennter Kanäle 11, 12, ..., 1k zum räumlich voneinander getrennten Übertragen von Signalen auf einer gemeinsamen Trägerfrequenz f0 aufweist.

Diese Koppelanordnung weist eine der Anzahl L der ersten Übertragungsmedien 1 gleiche Anzahl L erster Schalteinrichtungen 3 auf, von denen jede genau einem Übertragungsmedium 1 zugeordnet ist, wobei jede erste Übertragungseinrichtung 3 eine der Zahl k der Kanäle des zugeordneten ersten Übertragungsmediums 1 gleiche Anzahl k Eingänge 21, 22, ..., 2k für jeweils einen dieser Kanäle 11, 12, ... bzw. 1k und eine für alle ersten Schalteinrichtungen 3 gleiche Anzahl k'Ausgänge 201, 202, ..., 20k' aufweist und wobei jede erste Schalteinrichtung 3 derart ausgebildet ist, daß jedes an einem ihrer Eingänge 21 bis 22k anliegende Signal wahlweise auf jeden ihrer Ausgänge 201 bis 20k' schaltbar ist.

In einer zweiten Stufe weist die Koppelanordnung nach Figur 3 eine der Anzahl k' der Ausgänge 201 bis 20k' einer ersten Schalteinrichtung 3 gleiche Anzahl k' zweiter Schalteinrichtungen 4, von denen jede eine der Anzahl L der ersten Übertragungsmedien 1 gleiche Anzahl L Eingänge 31, 32, ...3L und die gleiche Anzahl L Ausgänge 301, 302, ..., 30L aufweist, wobei jede zweite Schalteinrichtung 4 derart ausgebildet ist, daß jedes an einem ihrer Eingänge 31 bis 3L anliegende Signal wahlweise auf jeden ihrer Ausgänge 301 bis 30L schaltbar ist.

In der dritten Stufe weist die Koppelanordnung nach Figur 3 eine der Anzahl L zweiten Übertragungsmedien 2 gleiche Anzahl L dritter Schalteinrichtungen 5 auf, von denen jede genau einem zweiten Übertragungsmedium 2 zugeordnet ist, wobei jede dritte Schalteinrichtung 5 eine der Anzahl k' der zweiten Schalteinrichtungen 4 gleiche Anzahl k' Eingänge 41, 42, ...4k und eine der Anzahl k der Kanäle des zugeordneten zweiten Übertragungsmediums 2 gleiche Anzahl k Ausgänge 401, 402, ..., 40k aufweist, und wobei jede dritte Schalteinrichtung 5 derart ausgebildet ist, daß jedes an einem ihrer Eingänge 41 bis 4k' anliegende Signal wahlweise auf jeden ihrer Ausgänge schaltbar ist.

Die Ausgänge 201 bis 20k' jeder ersten Schalteinrichtung 3 der ersten Stufe sind mit allen zweiten Schalteinrichtungen 4 der zweiten Stufe derart verbunden, daß jeder Ausgang 201 bis 20k' dieser ersten Schalteinrichtung 3 mit einem Eingang 31, 32, ... bzw. 3L jeder zweiten Schalteinrichtung 4 verbunden ist und jeder Eingang 31 bis 3L jeder zweiten Schalteinrichtung 4 mit einem Eingang einer ersten Schalteinrichtung 3 verbunden ist, beispielsweise so, wie in der Figur 3 dargestellt.

Die Eingänge 41 bis 4L jeder dritten Schalteinrichtung 5 sind mit allen zweiten Schalteinrichtungen derart verbunden, daß jeder Eingang 41, 42, ..bzw. 4k' dieser dritten Schalteinrichtung 5 mit einem Ausgang 301, 302, ... bzw. 30L jeder zweiten Schalteinrichtung 4 verbunden ist und jeder Ausgang 301, 302, ... bzw. 30L der zweiten Schalteinrichtung 4 mit einem Eingang 41, 42, ... bzw. 4k einer dritten Schalteinrichtung 5 verbunden ist, beispielsweise so, wie in der Figur 3 dargestellt.

Bei einer herkömmlichen derartigen Koppelordnung nach Figur 3 bestehen die ersten, zweiten und dritten Schalteinrichtungen 3, 4 bzw. 5 jeweils aus aus einer Cross-Bar-Matrix. Bei der erfindungsgemäßen Koppelanordnung nach Figur 3 ist dagegen jede erste, zweite und dritte Schalteinrichtung 3, 4 bzw. 5 aus einem Shared-Medium-Schalter gebildet, wobei der Shared-Medium-Schalterder ersten und zweiten Schalteinrichtung 3 bzw. 4 nach dem Prinzip Verteilen und Selektieren vorbestimmter Frequenzen und der Shared-Medium-Schalter der dritten Schalteinrichtung 5 nach dem Prinzip einer Adressierung vorbestimmter Frequenzen arbeitet.

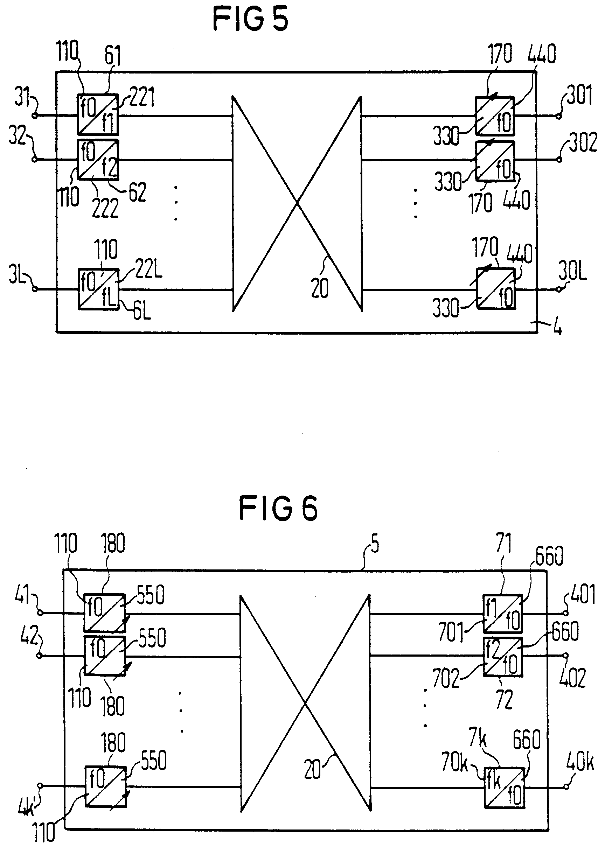

Die Figur 4 ist eine bevorzugte Ausführungsform eines nach dem Prinzip Verteilen und Selektieren arbeitenden Shared-Medium-Schalters einer ersten Schalteinrichtung 3, der für jede erste Schalteinrichtung 3 der Koppelanordnung nach Figur 3 verwendet werden kann.

Bei diesem Shared-Medium-Schalter nach Figur 4 ist jedem Eingang 21, 22, ... bzw. 2k dieser ersten Schalteinrichtung 3 je eine Frequenz aus einer der Anzahl k der Kanäle gleichen Anzahl k voneinander verschiedener vorbestimmter Frequenzen f1 bis fk aufgrund einer für diese erste Schalteinrichtung vorbestimmten Verteilung dieser vorbestimmten Frequenzen f1 bis fk auf die Eingänge 21 bis 2k dieser ersten Schalteinrichtung 3 fest zugeordnet. Jedes diesem Eingang 21, 22, ... bzw. 2k zugeführte Signal auf der gemeinsamen Trägerfrequenz f0 ist auf die diesem Eingang 21, 22, ... bzw. 2k fest zugeordnete Frequenz transformierbar und leistungsmäßig auf die Ausgänge 201 bis 20k' dieser ersten Schalteinrichtung 3 verteilbar.

An jedem dieser Ausgänge 201 bis 20k' ist aus einem diesem Ausgang durch die leistungsmäßige Verteilung der Signale zugeteilten Leistungsanteil ein Signal auf einer frei aus den verschiedenen vorbestimmten Frequenzen f1 bis fk auswählbaren Frequenz selektierbar und dieses selektierte Signal auf dieser Frequenz auf die gemeinsame Trägerfrequenz f0 transformierbar.

Ein Shared-Medium-Schalter einer zweiten Schalteinrichtung 4, der für jede zweite Schalteinrichtung 4 der Koppelanordnung nach Figur 3 verwendet werden kann, ist so ausgebildet, daß jedem Eingang 31, 32, ... bzw. 3L dieser zweiten Schalteinrichtung 4 je eine Frequenz aus einer der Anzahl L der Eingänge dieser zweiten Schalteinrichtung 4 gleichen Anzahl L verschiedener, aus den vorbestimmten Frequenzen f1 bis fk ausgewählten Frequenz f, f2, ...,fL aufgrund einer für diese zweite Schalteinrichtung 4 vorbestimmten Verteilung der ausgewählten Frequenzen f1 bis fL auf die Eingänge 31 bis 3L dieser zweiten Schalteinrichtung 4 fest zugeordnet ist, und daß jedes diesem Eingang 31, 32, ... bzw. 3L zugeführte Signal auf der gemeinsamen Trägerfrequenz f0 auf die diesem Eingang 31, 32, ... bzw. 3L fest zugeordnete Frequenz transformierbar und leistungsmäßig auf die Ausgänge 301 bis 30L dieser zweiten Schalteinrichtung 4 verteilbar ist. Überdies ist bei diesem Shared-Medium-Schalter der zweiten Schalteinrichtung 4 an jedem der Ausgänge 301 bis 30L aus einem diesem Ausgang durch die leistungsmäßige Verteilung der Signale zugeteilten Leistungsanteil ein Signal auf einer frei aus den verschiedenen ausgewählten Frequenzen f1 bis fL auswählbaren Frequenz selektierbar und dieses selektierte Sginal auf die gemeinsame Trägerfrequenz f0 transformierbar.

Eine bevorzugte Ausgestaltung eines Shared-Medium Schalters einer ersten Schalteinrichtung 3 ist in der Figur 4 und eine bevorzugte Ausgestaltung eines Shared-Medium-Schalters einer zweiten Schalteinrichtung 4 ist in der Figur 5 dargestellt.

Nach Figur 4 weist der Shared-Medium-Schalter der ersten Schalteinrichtung 3 pro Eingang 21, 22, ... bzw. 2k dieser ersten Schalteinrichtung 3 je einen eingangsseitigen Frequenzkonverter 61, 62, ... bzw. 6k zum Empfang eines diesem Eingang zugeführten Signals auf der gemeinsamen Trägerfrequenz f0 und Umwandeln dieses Signals in ein entsprechendes Signal auf der diesem Eingang fest zugeordneten Frequenz aus den verschiedenen vorbestimmten Frequenzen f1 bis fk auf.

Darüberhinaus ist eine Einrichtung 20 zum leistungsmäßigen Verteilen der auf die verschiedenen Frequenzen f1 bis fk transformierten Signale auf die Ausgänge 201 bis 20k' dieser ersten Schalteinrichtung 3 vorgesehen.

Weiter ist pro Ausgang 201, 202, ...20k' dieser ersten Schalteinrichtung 3 je ein wahlweise auf jede der verschiedenen vorbestimmten Frequenzen f1 bis fk abstimmbarer ausgangsseitiger Frequenzkonverter 170 zum Empfang des diesem Ausgang 202, 203, .. bzw. 20k' aufgrund der leistungsmäßigen Verteilung der Signale zugeteilten Leistungsanteils, Selektieren eines Signals aus diesem Leistungsanteil auf einer Frequenz, auf die der ausgangsseitige Frequenzkonverter 170 gerade abgestimmt ist, und Umwandeln dieses selektierten Signals auf dieser Frequenz in ein entsprechendes Signal auf der Trägerfrequenz f0 vorgesehen.

Die in Figur 5 dargestellte Ausgestaltung des Shared-Medium-Schalters der zweiten Schalteinrichtung 4 unterscheidet sich von der Ausgestaltung nach Figur 4 des Shared-Medium-Schalters der ersten Schalteinrichtung 3 lediglich dadurch, daß anstelle von k eingangsseitigen Frequenzkonvertern 61 bis 6k eine Anzahl L eingangsseitiger Frequenzkonverter 61 bis 6L, und anstelle von k' ausgangsseitigen Frequenzkonvertern die gleiche Anzahl L ausgangsseitiger Frequenzkonverter 170 vorhanden sind, und daß die eingangsseitigen Frequenzkonverter 61 bis 6L auf die ausgewählten Frequenzen f1 bis fL anstelle der vorbestimmten Frequenzen f1 bis fk transformieren, und daß den ausgangsseitigen Frequenzkonvertern 170 die ausgewählten Frequenzen anstelle der vorbestimmten Frequenzen zugeführt sind.

Jeder eingangsseitige Frequenzkonverter 61 bis 6k bzw. 61 bis 6L eines Shared-Medium-Schalters nach Figur 4 oder Figur 5 weist vorzugsweise einen auf die gemeinsame Trägerfrequenz f0 abgestimmten Signalempfänger 110 zum Detektieren eines Signals auf dieser Trägerfrequenz f0 und einen Signalsender 221 bis 22k bzw. 221 bis 2L auf, der in Abhängigkeit von dem detektierten Signal ein diesem detektierten Signal auf der Trägerfrequenz f0 gleiches Signal auf der dem zu diesem Frequenzkonverter 61 bis 6k bzw. 61 bis 6L gehörenden Eingang 21 bis 2k bzw. 21 bis 2L fest zugeordneten Frequenz auf.

Jeder ausgangsseitige Frequenzkonverter 170 des Shared-Medium-Schalters nach Figur 4 oder 5 weist vorzugsweise eienn wahlweise auf jede der verschiedenen vorbestimmten Frequenzen f1 bis fk abstimmbaren Signalempfänger 330 zum Detektieren eines Signals auf die Frequenz, auf die der Signalempfänger 330 gerade abgestimmt ist und einen Signalsender 660 auf, der in Abhängigkeit von dem detektierten Signal ein diesem detektierten Signal auf dieser Frequenz gleiches Signal auf der gemeinsamen Trägerfrequenz f0 erzeugt.

Der Shared-Medium-Schalter jeder dritten Schalteinrichtung 5 ist vorzugsweise so ausgebildet, daß den verschiedenen Eingängen 41 bis 4k' dieser dritten Schalteeinrichtung 5 zugeführte Signal auf der gemeinsamen Trägerfrequenz f0 frei wählbar auf jede der vorbestimmten Frequenzen f1 bis fk transformierbar sind, daß jedes auf eine dieser vorbestimmten Frequenzen transformierte Signal leistungsmäßig auf die Ausgänge 401 bis 40k dieser dritten Schalteinrichtung 5 verteilbar ist, und daß an jedem dieser Ausgänge 401 bis 40k aus einem aus diesem Ausgang durch die leistungsmäßige Verteilung der Signale zugeteilten Leistungsanteil ein Signal auf einer diesem Ausgang aufgrund einer für diese dritte Schalteinrichtung 5 vorbestimmten Verteilung der vorbestimmten Frequenzen f1 bis fk auf diese Ausgänge 401 bis 40k fest zugeordneten Frequenz aus den verschiedenen vorbestimmten Frequenzen f1 bis fk selektierbar und dieses selektierte Signal auf die gemeinsamen Trägerfrequenz f0 transformierbar ist.

Eine vorbestimmte Ausgestaltung dieser bevorzugten Ausführungsform eines Shared-Medium-Schalters einer dritten Schalteinrichtung 5 ist in Figur 6 dargestellt.

Diese Ausgestaltung weist pro Eingang 41 bis 4k' dieser Schalteinrichtung 5 je einen einstellbaren eingangsseitigen Frequenzkonverter 180 zum Empfang eines diesem Eingang zugeführten Signals auf der gemeinsamen Trägerfrequenz f0 und Umwandeln dieses Signals auf einer für diesen Eingang frei aus den verschiedenen vorbestimmten Frequenzen f1 bis fk auswählbaren Frequenz auf.

Überdies ist eine Einrichtung 20 zum leistungsmäßigen Verteilen jedes der auf die verschiedenen vorbestimmten Frequenzen f1 bis fk transformierten Signale auf die Ausgänge 401 bis 4k dieser dritten Schalteinrichtung 5 vorgesehen.

Außerdem ist pro Ausgang 401 bis 40k dieser dritten Schalteinrichtung 5 je ein ausgangsseitiger Frequenzkonverter 71, 72, ...bzw. 7k zum Empfang des diesem Ausgang 401, 402, ... bzw. 40k aufgrund der leistungsmäßigen Verteilung der Signale zugeteilten Leistungsanteils und Selektieren eines Signals aus diesem Leistungsanteil auf einer diesem Ausgang aufgrund der vorbestimmten festen Verteilung der verschiedenen Frequenzen f1 bis fk auf die Ausgänge 401 bis 40k dieser dritten Schalteinrichtung 5 fest zugeordneten Frequenz und Umwandeln dieses selektierten Signals in ein gleiches Signal auf der gemeinsamen Trägerfrequenz f0 vorgesehen.

Jeder eingangsseitige Frequenzkonverter 180 des Shared-Medium-Schalters nach Figur 6 einen auf die gemeinsame Trägerfrequenz f0 abgestimmten Signalempfänger 110 zum Detektieren eines Signals auf dieser Trägerfrequenz f0 und einen frei auf jede der verschiedenen vorbestimmten Frequenzen f1 bis fk einstellbaren Signalsender 550 auf, der in Abhängigkeit von dem detektierten Signal ein dem detektierten Signal auf der Trägerfrequenz f0 entsprechendes Signal auf der vorbestimmtenFrequenz, auf die dieser Signalsender 550 gerade eingestellt ist, erzeugt.

Jeder ausgangsseitige Frequenzkonverter 71 bis 7k des Shared-Medium-Schalters nach Figur 6 weist vorzugsweise einen auf die diesem Frequenzkonverter 71, 72, ...7k gehörenden Ausgang 401, 402, ... bzw. 40k fest zugeordnete Frequenz abgestimmten Signalempfänger zum Detektieren eines Signals auf dieser festen Frequenz und einen Signalsender 660 auf, der in Abhängigkeit vom detektierten Signal ein dem detektierten Signal auf der festen Frequenz gleiches Signal auf der gemeinsamen Trägerfrequenz f0 erzeugt.

Die Shared-Medium-Schalter nach den Figuren 4 und 5 sind Shared-Medium-Schalter, die nach dem Prinzip Verteilen und Selektieren mit auf die verschiedenen abstimmbaren oder auswählbaren Frequenzen f1 bis fk bzw. f1 bis fL abstimmbaren oder durchstimmbaren Signalempfängern 170 arbeiten.

Der Shared-Medium-Schalter nach Figur 6 ist ein Shared-Medium-Schalter, der nach dem Prinzip der Frequenzadressierung mit auf die verschiedenen vorbestimmten Frequenzen f1 bis fk einstellbaren oder durchstimmbaren Signalsendern 550 arbeitet.

Alle Signalempfänger 110 und 701 bis 70k und alle Signalsender 41 bis 4L, 221 bis 22k, 440 und 660, denen jeweils eine Frequenz aus den verschiedenen Frequenzen f0, f1, f2, ...fk fest zugeordnet ist, können fest auf die zugeordnete Frequenz festgelegte oder einstellbare Empfänger oder Sender sein, die auf die fest zugeordnete Frequenz eingestellt sind.

Jede der erfindungsgemäßen Koppelanordnungen ist für elektrische und optische Vermittlungssysteme anwendbar, wobei die ein- oder zweifach einstellbaren eingangs- oder ausgangsseitigen Frequenzkonverter 21 bis 2L, 31 bis 3L, 61 bis 6k, 170 und 180 durch eine Steuerlogik auf die gewünschte Frequenz von Fall zu Fall einstellbar sind.

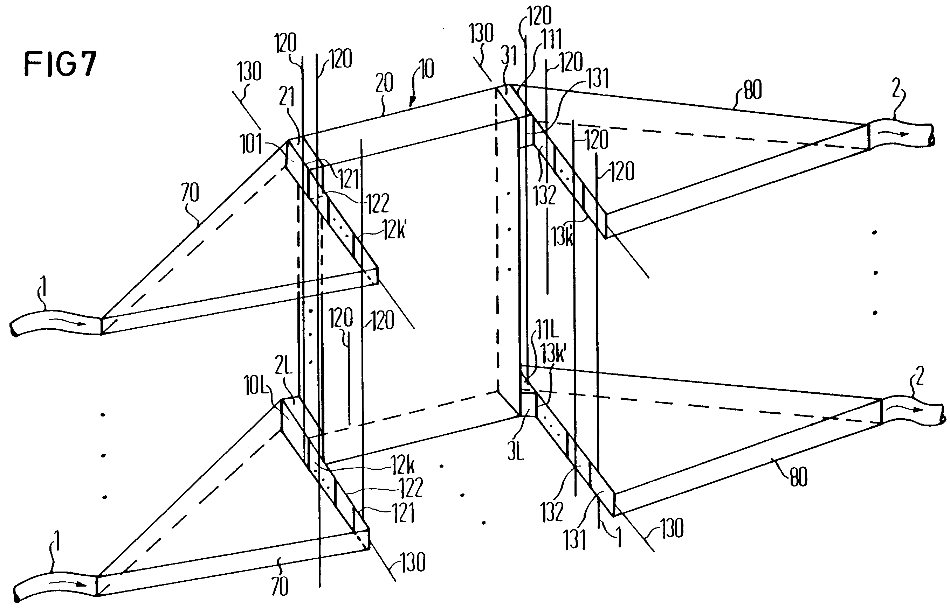

Jede erfindungsgemäße Koppelanordnung läßt sich auch durch die bekannte orthogonale Topologie für die Zusammenschaltung erheblich kompaktifizieren und vereinfachen. Dies sei an einem in Figur 7 dargestellten, für optische Signalübertragung ausgelegten Beispiel für die Koppelanordnung nach Figur 1 stellvertretend für alle übrigen erfindungsgemäßen Koppelanordnungen gezeigt.

Nach Figur 7 sind die k' Schaltvorrichtungen 10, die auch Schaltvorrichtungen 10a sein könnten, von denen nur eine erste dargestellt ist, in k vertikalen Ebenen derart nebeneinander angeordnet, daß die Eingänge 101 bis 10L und Ausgänge 101 bis 11L jeder Schaltvorrichtung 10 in jeweils einer vertikalen Linie 120 in einer solchen Ebene in Reihe untereinander angeordnet sind.

Die L eingangsseitigen Einrichtungen 70 und die L ausgangsseitigen Einrichtungen 80 sind dagegen in parallelen horizontalen Ebenen derart untereinander angeordnet, daß die k' Ausgänge 121 bis 12k' jeder eingangsseitigen Einrichtung 70 und die k' Eingänge 131 bis 13k' jeder ausgangsseitigen Einrichtung 8 jeweils in einer horizontalen Linie 130 in einer solchen Ebene waagerecht nebeneinander angeordnet sind.

Dabei sind die Ausgänge 121 bis 12k' jeder eingangsseitigen Einrichtung 70 und die waagerecht nebeneinander angeordneten Schaltvorrichtungen 10 derart räumlich verteilt, daß ein Ausgang 121 bis 12k' dieser Einrichtung 70 und ein Eingang 101 bis 10L einer Schaltvorrichtung 10, die aufgrund einer für alle diese Aus- und Eingänge vorgegebenen Verbindungsvorschrift einander zugeordnet sind, sich gegenüberliegen, so wie es in der Figur 7 für den Ausgang 121 und Eingang 101 sowie den Ausgang 12k' und Eingang 10L beispielhaft dargestellt ist.

Anloges gilt für die Ausgänge 111 bis 11L der Schaltvorrichtungen 10 und die Eingänge 131 bis 13k' der ausgangsseitigen Einrichtungen 80. Beispielsweise liegen sich hier der Ausgang 111 und der Eingang 131 sowie der Eingang 11L und der Ausgang 13k' gegenüber.

**Patentansprüche**

1. Schaltvorrichtung (1) mit einer Anzahl (L = 1, 2, 3, ...) Eingängen (101, 102, 103, ...10L) und einer Anzahl (L) Ausgängen (111, 112, ..., 11L) zum Schalten von den Eingängen (101, 102, ...10L) zugeführten Signalen auf die Ausgänge (111, 112, ..., 111L) wobei jedes einem Eingang (101, 102, ..., 10L)zugeführte Signal wahlweise auf jeden Ausgang (111, 112, ..., 11L)-schaltbar ist,

   **dadurch gekennzeichnet,**

   - daß jedem Eingang (101, 102, ..., 10L) je eine Frequenz aus einer der Anzahl (L) der Eingänge (101, 102, ..., 10L) gleichen Anzahl (L) verschiedener, aus einer Anzahl (k = 1, 2, 3, ...) vorbestimmter verschiedener Frequenzen (f1, f2, ..., fk) ausgewählter Frequenzen (f1, f2, f3, .., fL) aufgrund einer vorbestimmten festen Verteilung dieser ausgewählten Frequenzen (f1, f2, ..., fL) auf die verschiedenen Eingänge (101, 102, ..., 10L) fest zugeordnet ist,
   - daß pro Eingang (101, 102, ..., 10L) je ein einstellbarer eingangsseitiger Frequenzkonverter (21, 22, ..., 2L) vorgesehen ist, der ein diesem Eingang (101, 102, ..., 10L) zugeführtes Signal auf einer der verschiedenen vorbestimmten Frequenzen (f1, f2, ..., fk) in ein diesem Signal entsprechendes Signal auf der diesem Eingang (101, 102, ..., 10L) fest zugeordneten ausgewählten Frequenz (f1, f2, ..., fL) nur dann umwandelt, wenn dieser eingangsseitige Frequenzkonverter (21, 22, ..., 2L) auf die vorbestimmte Frequenz (f1, f2, ..., fk) dieses zugeführten Signals eingestellt ist,
   - daß eine Einrichtung (20) zum leistungsmäßigen Verteilen jedes der frequenzmäßig umgewandelten Signale einzeln und/oder in einer Vermischung miteinander, auf die verschiedenen Ausgänge (111, 112, ..., 11L) vorgesehen ist,
   - daß pro Ausgang (111, 112, ..., 11L) je ein zweifach einstellbarer ausgangsseitiger Frequenzkonverter (31, 32, ..., 3L) vorgesehen ist, der aus dem diesem Ausgang (111, 112, ..., 11L) aufgrund der leistungsmäßigen Verteilung der Signale zugeteilten Leistungsanteil ein Signal auf einer der verschiedenen ausgewählten Frequenzen (f1, f2, ..., fL) nur dann selektiert, wenn dieser ausgangsseitige Frequenzkonverter (31, 32, ..., 3L) einerseits wahlweise auf diese ausgewählte Frequenz eingestellt ist, und der das selektierte Signal auf dieser eingestellten ausgewählten Frequenz in ein diesem selektierten Signal entsprechendes Signal auf einer der verschiedenen vorbestimmten Frequenzen (f1, f2, .., fk) umwandelt, auf die dieser ausgangsseitige Frequenzkonverter (31, 32, ..., 3L) andererseits wahlweise eingestellt ist.

2. Schaltvorrichtung (10) mit einer Anzahl (L = 1, 2, 3, ...) Eingängen (101, 102, 103, ...10L) und einer Anzahl (L) Ausgängen (111, 112, ..., 11L) zum Schalten von den Eingängen (101, 102, ...10L) zugeführten Signalen auf die Ausgänge (111, 112, ..., 111L) wobei jedes einem Eingang (101, 102, ..., 10L)zugeführte Signal wahlweise auf jeden Ausgang (111, 112, ..., 11L)-schaltbar ist,

   **dadurch gekennzeichnet,**

   - daß jedem Ausgang (111, 112, ..., 11L) je eine Frequenz aus einer der Anzahl (L) der Ausgänge (111, 112, ..., 11L) gleichen Anzahl (L) verschiedener, aus einer Anzahl (k = 1, 2, 3, ...) vorbestimmter verschiedener Frequenzen (f1, f2, ..., fk) ausgewählter Frequenzen (f1, f2, f3, .., fL) aufgrund einer vorbestimmten festen Verteilung dieser ausgewählten Frequenzen (f1, f2, ..., fL) auf die verschiedenen Ausgänge (111, 112, ..., 11L) fest zugeordnet ist,
   - daß pro Eingang (101, 102, ..., 10L) je ein zweifach einstellbarer eingangsseitiger Frequenzkonverter (21a, 22a, ..., 2La) vorgesehen ist, der ein diesem Eingang (101, 102, ..., 10L) zugeführtes Signal auf einer der verschiedenen vorbestimmten Frequenzen (f1, f2, ..., fk) nur dann selektiert, wenn dieser eingangsseitige Frequenzkonverter (21, 22, ... 2L) einerseits wahlweise auf die vorbestimmte Frequenz (f1, f2, ..., fk) dieses zugeführten Signals eingestellt ist, und der das selektierte Signal auf dieser eingestellten vorbestimmten Frequenz ( f1,f2, ... fk) in ein diesem selektierten Signal entsprechendes Signal auf einer der verschiedenen ausgewählten Frequenzen (f1, f2, ...fL) umwandelt, auf die dieser eingangsseitige Frequenzkonverter (21, 22, ... 2L) andererseits wahlweise eingestellt ist,
   - daß eine Einrichtung (20) zum leistungsmäßigen Verteilen jedes der frequenzmäßig umgewandelten Signale einzeln und/oder in einer Vermischung miteinander, auf die verschiedenen Ausgänge (111, 112, ..., 11L) vorgesehen ist,

- daß pro Ausgang (111, 112, ..., 11L) je ein einstellbarer ausgangsseitiger Frequenzkonverter (31a, 32a, ..., 3La) vorgesehen ist, der aus dem diesem Ausgang (111, 112, ..., 11L) aufgrund der leistungsmäßigen Verteilung der Signale zugeteilten Leistungsanteil ein Signal auf der diesem Ausgang (111, 112, ... 11L) fest zugeordneten ausgewählten Frequenz (f1, f2, ..., fL) nur dann selektiert, wenn die Frequenz dieses Signals mit der diesem Ausgang (111, 112, ... 11L) fest zugeordneten ausgewählten Frequenz (f1, f2, ... , fL) übereinstimmt, und der dieses selektierte Signal auf dieser ausgewählten Frequenz in ein diesem selektierten Signal entsprechendes Signal auf einer der verschiedenen vorbestimmten Frequenzen (f1, f2, .., fk) umwandelt, auf die dieser ausgangsseitige Frequenzkonverter (31a, 32a, ..., 3La) wahlweise eingestellt ist.

3. Schaltvorrichtung nach Anspruch 1, **dadurch gekennzeichnet,** daß ein eingangsseitiger Frequenzkonverter (21, 22, ..., 2L) einen wahlweise auf jede der verschiedenen vorbestimmten Frequenzen (f1, f2, ..., fk) abstimmbaren Signalempfänger (30) zum Detektieren eines Signals auf der Frequenz, auf die der Signalempfänger (30) gerade abgestimmt ist, und einen Signalsender (41, 42,...,4L) zum von diesem detektierten Signal abhängigen Erzeugen eines diesem detektierten Signal entsprechenden Signals auf der ausgewählten Frequenz, die dem zu diesem eingangsseitigen Frequenzkonverter (21, 22, ...2L) gehörenden Eingang (101, 102, ..., 10L) fest zugeordnet ist, aufweist.

4. Schaltvorrichtung nach Anspruch 1 oder 3, **dadurch gekennzeichnet,** daß ein ausgangsseitiger Frequenzkonverter (31, 32, ..., 3L) einen wahlweise auf jede der verschiedenen ausgewählten Frequenzen (f1, f2, ..., fL) abstimmbaren Signalempfänger (50) zum Detektieren eines Signals auf der ausgewählten Frequenz, auf die dieser Signalempfänger (50) gerade abgestimmt ist, und einen wahlweise auf jede der vorbestimmten Frequenzen (f1, f2, ..., fk) einstellbaren Signalsender (60) zum von diesem detektierten Signal auf dieser ausgewählte Frequenz abhängigen Erzeugen eines diesem detektierten Signal entsprechenden Signals auf der vorbestimmten Frequenz, auf die dieser Signalsender (60) gerade eingestellt ist, aufweist.

5. Schaltvorrichtung nach Anspruch 2, dadurch **gekennzeichnet,** daß ein eingangsseitiger Frequenzkonverter (21a, 22a, ..., 2La) einen wahlweise auf jede der verschiedenen vorbestimmten Frequenzen (f1, f2, ..., fk) abstimmbaren Signalempfänger (30) zum Selektieren eines Signals auf der Frequenz, auf die der Signalempfänger (30) gerade abgestimmt ist, und einen wahlweise auf jede der ausgewählten Frequenzen (f1, f2, ..., fL) einstellbaren Signalsender (40) zum von diesem detektierten Signal auf dieser vorbestimmten Frequenz abhängigen Erzeugungeines diesem selektierten Signal entsprechenden Signals auf der ausgewählten Frequenz, auf die dieser Signalsender (40) gerade eingestellt ist, aufweist.

6. Schaltvorrichtung nach Anspruch 2 oder 5, dadurch **gekennzeichnet,** daß ein ausgangsseitiger Frequenzkonverter (31a, 32a, ... 3La) einen auf die dem zu diesem Frequenzkonverter (31a, 32a, ... 3La) gehörenden Ausgang (111, 112, ... 11L) fest zugeordnete ausgewählte Frequenz (f1, f2 , fL) abgestimmten Signalempfänger (51, 52, ..., 5L) zum Detektieren eines Signals auf dieser ausgewählten Frequenz (f1, f2, ..., fL) und einen wahlweise auf jede der vorbestimmten Frequenzen (f1, f2, ...,fk) einstellbaren Signalsender (60) zum von diesem detektierten Signal auf dieser ausgewählten Frequenz abhängigen Erzeugen eines diesem detektierten Signal entsprechenden Signals auf der vorbestimmten Frequenz, auf die dieser Signalsender gerade eingestellt ist, aufweist.

7. Koppelanordnung zum Verkoppeln einer Anzahl (L) erster Übertragungsmedien (1) mit der gleichen Anzahl (L) zweiter Übertragungsmedien (2) mittels einer Anzahl (k' = 1, 2, 3, ...) Schaltungvorrichtungen (10) nach Anspruch 1, 3 und/oder 4 und/oder einer Anzahl (k', 1, 2, 3, ...) Schaltvorrichtungen (10a) nach Anspruch 2, 5 und/oder 6), wobei jedes erste Übertragungsmedium (1) und jedes zweite Übertragungsmedium (2) zum Übertragen von Signalen auf der Anzahl (k) bestimmter verschiedener Frequenzen (f1, f2, ..., fk) vorgesehen ist, **dadurch gekennzeichnet,**

- daß pro erstem Übertragungsmedium (1) je eine eingangsseitige Einrichtung (70) mit einem Eingang (710) und einer der Anzahl (k') der Schaltvorrichtungen (10) gleichen Anzahl (k') Ausgängen (121, 122, ..., 12k') zum leistungsmäßigen Verteilen jedes dem Eingang (701) dieser Einrichtung (70) auf diesem ersten Übertragungsmedium (1) zugeführten Signals auf die Ausgänge (121, 122, ..., 12k') dieser Einrichtung (70) vorgesehen ist,

- daß jede der Schaltvorrichtungen (10; 10a)) eine der Anzahl (L) der Übertragungsmedien (1) gleiche Anzahl (L) Eingänge (101, 102, ..., 10L) und die gleiche Anzahl (5) Ausgänge (111, 112, ..., 11L) aufweist,

- daß bei allen Schaltvorrichtungen (10; 10a) die ausgewählten Frequenzen (f1, f2, ..., fL) in der gleichen vorbestimmten Verteilung auf die Eingänge (101, 102, ..., 10L) verteilt sind,

- daß pro zweitem Übertragungsmedium (2) je eine ausgangsseitige Einrichtung (80) mit einer der Anzahl (k') der Schaltvorrichtungen (10; 10a) gleichen Anzahl (k') Eingängen (131, 132, ..., 13k') und einem Ausgang (810) zum Übertragen von diesen Eingängen (131, 132, ..., 13k') zugeführten Signalen auf den Ausgang (810) dieser Einrichtung (80) an den dieses zweite Übertragungsmedium (2) anschließbar ist, vorgesehen ist,

- daß die Ausgänge (121, 122, ..., 12k') jeder eingangsseitigen Einrichtung (70) mit allen Schaltvorrichtungen (10) derart verbunden sind, daß jeder Ausgang (121, 122, ..., 12k') dieser eingangsseitigen Einrichtung (70) mit einem Eingang (101, 102, ..., 10L) einer Schaltvorrichtung (10) verbunden ist und jeder Eingang (101, 102, ..., 10L) jeder Schaltvorrichtung (10) mit einem Ausgang (121, 122, ..., 12k') einer eingangsseitigen Einrichtung (70) verbunden ist, und

- daß die Eingänge (131, 132, ..., 13k') jeder ausgangsseitigen Einrichtung (80) mit allen Schaltvorrichtungen (10) derart verbunden sind, daß jeder Eingang (131, 132, ..., 13L) dieser ausgangsseitigen Einrichtung (70) mit einem Ausgang (111, 112, ..., 11L) einer Schaltvorrichtung (10) verbunden ist und jeder Ausgang (111, 112, ..., 11L) jeder Schaltvorrichtung (10; 10a) mit einem Eingang (131, 132, ..., 13k') einer ausgangsseitigen Einrichtung (80) verbunden ist.

8.  Koppelanordnung zum Verkoppeln einer Anzahl (5) erster Übertragungsmedien (1) mit der gleichen Anzahl (L) zweiter Übertragungsmedien (2) mittels einer Anzahl (k' = 1, 2, 3, ..) Schaltvorrichtungen (10) nach Anspruch 1, 3 und/oder 4 und/oder einer Anzahl (k' = 1, 2, 3, ...) Schaltvorrichtungen (10a) nach Anspruch 2, 5 und/oder 6, wobei jedes erste Übertragungsmedium (1) und jedes zweite Übertragungsmedium (2) je eine der Anzahl (k) der vorbestimmten Frequenzen (f1, f2, ..., fk) gleiche Anzahl (k) Kanäle (11, 12, ..., 1k) zum Übertragen von raummäßig getrennten Signalen auf einer gemeinsamen Trägerfrequenz (f0),
**dadurch gekennzeichnet,**

- daß pro erstem Übertragungsmedium (1) je eine eingangsseitige Schalteinrichtung (90) mit einer der Anzahl (k) der Kanäle (11, 12, ..., 1k) gleichen Anzahl (k) Eingängen (151, 152, ..., 15k) und einer der Anzahl (k') der Schaltvorrichtungen (10; 10a) gleichen Anzahl (k') Ausgängen (161, 162, ..., 16k') vorgesehen ist, wobei jede dieser eingangsseitigen Schalteinrichtungen (90) derart ausgebildet ist, daß jedem der Eingänge (151, 152, ..., 15k) jeder eingangsseitigen Schalteinrichtung (90) aufgrund einer für diese eingangsseitige Schalteinrichtung (90) vorbestimmten Verteilung der verschiedenen vorbestimmten Frequenzen (f1, f2, ..., fk) je eine dieser vorbestimmten Frequenzen (f1, f2, ..., fk) fest zugeordnet ist, und jedes einem Eingang (151, 152, ..., 15k) jeder eingangsseitigen Schalteinrichtung (90) zugeführte Signal auf der gemeinsamen Trägerfrequenz (f0) in ein diesem Signal entsprechendes Signal auf der diesem Eingang (151, 152, ..., 15k) fest zugeordneten vorbestimmten Frequenz transformierbar und, einzeln und/oder in einer Vermischung miteinander, leistungsmäßig auf die Ausgänge (161, 162, ...16k) dieser eingangsseitigen Schalteinrichtung (90) verteilbar ist,

- daß pro zweitem Übertragungsmedium (2) je eine ausgangsseitige Schalteinrichtung (100) mit einer der Anzahl (k') der Schaltvorrichtungen (10) gleichen Anzahl (k') Eingängen (171, 172, ..., 17k') und einer der Anzahl (k) der Kanäle (11, 12, ..., 1k) gleichen Anzahl (k) Ausgängen (181, 182, ..., 18k) vorgesehen ist, wobei jede dieser ausgangsseitigen Schalteinrichtungen (100) derart ausgebildet ist, daß jedes einem Eingang (171, 172, ..., 17k') dieser ausgangsseitigen Schalteinrichtung (100) zugeführte Signal auf einer der verschiedenen vorbestimmten Frequenzen (f1, f2, ..., fk), einzeln und/oder in einer Vermischung miteinander, leistungsmäßig auf die Ausgänge (181, 182, ..., 18k) dieser ausgansseitigen Schalteinrichtung (100) verteilbar ist, daß jedem Ausgang (181, 182, ..., 18k) dieser ausgangsseitigen Schalteinrichtung (100) aufgrund einer für diese ausgangsseitige Schalteinrichtung (100) vorbestimmten Verteilung der verschiedenen vorbestimmten Frequenzen (f1, f2, ..., fk) je eine dieser vorbestimmten Frequenzen fest zugeordnet ist, und daß aus dem jedem Ausgang (181, 182, ..., 18k) jeder ausgangsseitigen Schalteinrichtung (100) aufgrund der leistungsmäßigen Verteilung der Signale zugeteilten Leistungsanteil ein Signal auf der diesem Ausgang (181, 182, ..., 18k) fest zugeordneten vorbestimmten Frequenz selektierbar und in ein diesem Signal entsprechendes Signal auf der gemeinsamen Trägerfrequenz (f0) transformierbar ist,

- daß die Ausgänge (161, 162, ..., 16k') jeder eingangsseitigen Schalteinrichtung (90) mit allen Schaltvorrichtungen (10; 10a) derart verbunden sind, daß jeder Ausgang (161, 162, ..., 16k') dieser eingangsseitigen Schalteinrichtung (90) mit einem Eingang (101, 102, ..., 10L) einer Schaltvorrichtung (10) verbunden ist und jeder Eingang (101, 102, ..., 10L) jeder Schaltvorrichtung (10; 10a) mit einem Ausgang (161, 162, ..., 16k') einer eingangsseitigen Schaltvorrichtung (90) verbunden ist, und

- daß die Eingänge (171, 172, ..., 17k') jeder ausgangsseitigen Schalteinrichtung (100) mit allen Schaltvorrichtungen (10; 10a) derart verbunden sind, daß jeder Eingang (171, 172, ... 17k') jeder ausgangsseitigen Schalteinrichtung (100) mit allen Schaltvorrichtungen (10) derart verbunden sind, daß jeder Eingang (171, 172, ..., 17k') dieser ausgangsseitigen Schalteinrichtung (100) mit einem Ausgang (111, 112, ..., 11L) einer Schaltvorrichtung (10) verbunden ist und jeder Ausgang (111, 112, ..., 11L) jeder Schaltvorrichtung (10; 10a) mit einem Eingang (171, 172, ..., 17k') einer ausgangsseitigen Schaltvorrichtung (100) verbunden ist.

9. Koppelanordnung nach Anspruch 8,
   **dadurch gekennzeichnet,**
   daß eine eingangsseitige Schalteinrichtung (90) pro Eingang (151, 152, ..., 15k) dieser eingangsseitigen Schalteinrich-tung (90) je einen eingangsseitigen Frequenzkonverter (61, 62, ..., 6k)) zum Empfang eines diesem Eingang (151, 152, ..., 15k) zugeführten Signals auf der gemeinsamen Trägerfrequenz (f0) in ein diesem Signal entsprechendes Signal auf der diesem Eingang (151, 152, ... 15k) fest zugeordneten vorbestimmten Frequenz (f1, f2, ..., fk) und eine Einrichtung (20) zum leistungsmäßigen Verteilen jedes durch einen eingangsseitigen Frequenzkonverter (61, 62, ..., 6k) auf eine vorbestimmte Frequenz gebrachten Signals auf die Ausgänge (161, 162, ..., 16k) dieser eingangsseitigen Schalteinrichtung (90) aufweist.

10. Koppelanordnung nach Anspruch 9,
    **dadurch gekennzeichnet,** daß ein eingangsseitiger Frequenzkonverter (61, 62, ..., 6k) einen auf diese gemeinsame Trägerfrequenz (f0) abgestimmten Signalempfänger (110) zum Detektieren eines zugeführten Signals auf die Trägerfrequenz (f0) und einen Signalsender (221, 222, ..., 22k) zum von dem detektierten Signal auf dieser Trägerfrequenz (f0) abhängigen Erzeugen eines diesem detektieren Signal entsprechenden Signals auf der dem zu diesem eingangsseitigen Frequenzkonverter (61, 62, ..., 6k) gehörigen Eingang (151, 152, ..., 15k) der eingangsseitigen Schalteinrichtung (90) fest zugeordneten vorbestimmten Frequenz aufweist.

11. Koppelanordnung nach einem der Ansprüche 8 bis 10,
    **dadurch gekennzeichnet,** daß eine ausgangsseitige Schalteinrichtung (100) eine Einrichtung (20) zum leistungsmäßigen Verteilen jedes einem Eingang (171, 172, ..., 17k) dieser ausgangsseitigen Schalteinrichtung (100) zugeführten Signals auf jeder der verschiedenen vorbestimmten Frequenzen (f1, f2, ..,fk) auf die Ausgänge (181, 182, ..., 18k) dieser ausgangsseitigen Schalteinrichtung (100) und pro Ausgang (181, 182, ..., 18k) dieser ausgangsseitigen Schalteinrichtung (100) je einen ausgangsseitigen Frequenzkonverter (71, 72, ..., 7k) zum Empfang eines diesem Ausgang (181, 182, .., 18k) durch die leistungsmäßige Verteilung der Signale zugeteilten Leistungsanteils, Selektieren eines Signals auf der diesem Ausgang (181, 182, ..., 18k) fest zugeordneten vorbestimmten Frequenz aus dem zugeteilten Leistungsanteil und Transformieren dieses selektierten Signals auf dieser Frequenz in ein diesem Signal entsprechendes Signal auf der gemeinsamen Trägerfrequenz (f0) aufweist.

12. Koppelanordnung nach Anspruch 11,
    **dadurch gekennzeichnet,** daß ein ausgangsseitiger Frequenzkonverter (71, 72, .., 7k) einen auf die zu diesem ausgangsseitigen Frequenzkonverter (71, 72, ...7k) gehörenden Ausgang der ausgangsseitigen Schalteinrichtung (100) fest zugeordneten vorbestimmten Frequenz abgestimmten Signalempfänger (701, 702,

...70k) zum Detektieren eines zugeführten Signals aus dieser vorbestimmten Frequenz und einen Signalsender (710) zum von dem detektierten Signal auf dieser vorbestimmten Frequenz abhängigen Erzeugen eines diesem detektierten Signal entsprechenden Signal auf der gemeinsamen Trägerfrequenz (f0) aufweist.

13. Koppelanordnung zur Verkoppelung einer Anzahl (L) erster Übertragungsmedien (1) mit der gleichen Anzahl (L) zweiter Übertragungsmedien (2), wobei jedes erste Übertragungsmedium (1) und jedes zweite Übertragungsmedium (2) jeweils die gleiche Zahl (k) raummäßig getrennter Kanäle (11, 12, ... 1k) zum räumlich voneinander getrennten Übertragen von Signalen auf einer gemeinsamen Trägerfrequenz (f0) aufweist,

- mit einer der Anzahl (L) der ersten Übertragungsmedien (1) gleichen Anzahl (L) erster Schalteinrichtungen (3), von denen jede genau einem Übertragungsmedium (1) zugeordnet ist, wobei jede erste Übertragungseinrichtung (3) eine der Anzahl (k) der Kanäle (11, 12, ...1k) des zugeordneten ersten Übertragungsmediums (1) gleiche Anzahl (k) Eingänge (21, 22, ..., 2k) für jeweils einen dieser Kanäle (11, 12, ..., 1k) und eine für alle ersten Schalteinrichtungen (3) gleiche Anzahl (k') Ausgänge (201, 202, ..., 20k') aufweist, und wobei jede erste Schalteinrichtung (3) derart ausgebildet ist, daß jedes an einem ihrer Eingänge (21, 22, ..., 2k) anliegende Signal wahlweise auf jeden ihrer Ausgänge (201, 202, .., 20k') schaltbar ist,

- mit einer der Anzahl (k') der Ausgänge (201, 202, ..., 20k') einer ersten Schalteinrichtung (3) gleichen Anzahl (k') zweiter Schalteinrichtungen (4), von denen jede eine der Anzahl (L) der ersten Übertragungsmedien (1) gleiche Anzahl (L) Eingänge (31, 32, ..., 3L) und die gleiche Anzahl (L) Ausgänge (301, 302, ..., 30L) aufweist, wobei jede zweite Schalteinrichtung (4) derart ausgebildet ist, daß jedes an einem ihrer Eingänge (31, 32, ..., 3L) anliegende Signal wahlweise auf jeden ihrer Ausgänge (301, 302, ..., 30L) schaltbar ist, und

- mit einer der Anzahl (5) der zweiten Übertragungsmedien (2) gleichen Anzahl (5) dritter Schalteinrichtungen (5), von denen jede genau einem zweiten Übertragungsmedium (2) zugeordnet ist, wobei jede dritte Schalteinrichtung (5) eine der Anzahl (k') der zweiten Schalteinrichtungen (4) gleiche Anzahl (k') Eingänge (41, 42, ..., 4k') und eine der Anzahl (k) der Kanäle (11, 12, ..., 1k) des zugeordneten zweiten Übertragungsmediums (2) gleiche Anzahl (k) Ausgänge (401, 402, ..., 40k) aufweist, und wobei jede dritte Schalteinrichtung (5) derart ausgebildet ist, daß jedes an einem ihrer Eingänge (41, 42, ...4k') anliegende Signal wahlweise auf jeden ihrer Ausgänge schaltbar ist,

- wobei die Ausgänge (201, 202, ..., 20k') jeder ersten Schalteinrichtung (3) mit allen zweiten Schalteinrichtungen (4) derart verbunden sind, daß jeder Ausgang (201, 202, ..., 20k') dieser ersten Schalteinrichtung (3) mit einem Eingang (31, 32, ..., 3L) jeder zweiten Schalteinrichtung (4) verbunden ist und jeder Eingang (31, 32, ..., 3L) jeder zweiten Schalteinrichtung (4) mit einem Eingang (201, 202, ...20k') einer ersten Schalteinrichtung (3) verbunden ist, und

- wobei die Eingänge (41, 42, ..., 4L) jeder dritten Schalteinrichtung (5) mit allen zweiten Schalteinrichtungen (4) derart verbunden sind, daß jeder Eingang (41, 42, ..., 4k') dieser dritten Schalteinrichtung (5) mit einem Ausgang (301, 302, ..., 30L) jeder zweiten Schalteinrichtung (4) verbunden ist, und jeder Ausgang (301, 302, ..., 30L) der zweiten Schalteinrichtung (4) mit einem Eingang (41, 42, ..., 4k') einer dritten Schalteinrichtung (5) verbunden ist,

**dadurch gekennzeichnet,**
daß eine erste, zweite und dritte Schalteinrichtung (3, 4, 5) aus einem Shared-Medium-Schalter gebildet ist, wobei der Shared-Medium-Schalter der ersten und zweiten Schalteinrichtung (3, 4) nach dem Prinzip eines Verteilens und Selektierens vorbestimmter Frequenzen (f1, f2, ..., fk) und der Shared-Medium-Schalter der dritten Schalteinrichtung (5) nach dem Prinzip einer Adressierung vorbestimmter Frequenzen (f1, f2, ..., fk) arbeitet.

14. Koppelanordnung nach Anspruch 13, **dadurch gekennzeichnet,** daß eine erste Schalteinrichtung (3) aus einem Shared-Medium-Schalter gebildet ist, bei welchem jedem Eingang (21, 22, .., 2k) dieser ersten Schalteinrichtung (3) je eine Frequenz aus einer der Anzahl (k) der Kanäle (11, 12, ..., 1k) gleichen Anzahl (k) voneinander verschiedener vorbestimmter Frequenzen (f1, f2, ..., fk) aufgrund einer für diese erste Schalteinrichtung vorbestimmten Verteilung dieser vorbestimmten Frequenzen (f1, f2, ..., fk) auf die Eingänge (21, 22, ..., 2k) dieser ersten Schalteinrichtung (3) fest zugeordnet ist, und jedes diesem Eingang (21, 22, ..., 2k) zugeführte Signal auf der gemeinsamen Trägerfrequenz (f0) auf die diesem Eingang (21, 22, ..., 2k) fest zugeordnete Frequenz transformierbar und einzeln und/oder in einer Vermischung miteinander leistungsmäßig auf die Ausgänge (201, 202, ..., 20k') dieser ersten Schalteinrichtung (3) verteilbar ist, und bei welchem an jedem dieser Ausgänge (201, 202, ..., 20k')aus einem diesem Ausgang durch die leistungsmäßige Verteilung der Signale zugeteilten Leistungsanteil ein Signal auf einer frei aus den verschiedenen vorbestimmten Frequenzen (f1, f2, ..., fk) auswählbaren Frequenz selektierbar und dieses selektierte Signal auf dieser Frequenz auf die gemeinsame Trägerfrequenz (f0) transformierbar ist.

15. Koppelanordnung nach Anspruch 13 oder 14,
**dadurch gekennzeichnet,**
daß eine zweite Schalteinrichtung (4) aus einem Shared-Medium-Schalter gebildet ist, bei welchem

- jedem Eingang (31, 32, ..., 3L) dieser zweiten Schalteinrichtung (4) je eine Frequenz aus einer der Anzahl (L) der Eingänge (31, 32, ..., 3L) dieser zweiten Schalteinrichtung (4) gleichen Anzahl (L) verschiedener, aus einer der Anzahl (k) der Kanäle (11, 12, ..., 1k) gleichen Anzahl (k) voneinander verschiedener vorbestimmter Frequenzen (f1, f2, ...fk) ausgewählten Frequenzen (f1, f2, ..., fL) aufgrund einer für diese zweite Schalteinrichtung (4) vorbestimmten Verteilung der ausgewählten Frequenzen (f1, f2, ..., fL) auf die Eingänge (31, 32, ..., 3L) dieser zweiten Schalteinrichtung (4) fest zugeordnet ist und jedes diesem Eingang (31, 32, .., 3L) zugeführte Signal auf der gemeinsamen Trägerfrequenz (f0) auf die diesem Eingang (31, 32, .., 3L) fest zugeordnete Frequenz transformierbar und einzeln und/oder in einer Vermischung miteinander leistungsmäßig auf die Ausgänge (301, 302, ... 30L) dieser zweiten Schalteinrichtung (4) verteilbar ist, und bei welchem
- an jedem dieser Ausgänge (301, 302,..., 30L) aus einem diesem Ausgang durch die leistungsmäßige Verteilung der Signale zugeteilten Seistungsanteil ein Signal auf einer frei aus den verschiedenen ausgewählten Frequenzen (f1, f2, ..., fL) auswählbaren Frequenz selektierbar und dieses selektierte Signal auf die gemeinsame Trägerfrequenz (f0) transformierbar ist.

16. Koppelanordnung nach Anspruch 13, 14 oder 15,
**dadurch gekennzeichnet,**
daß eine dritte Schalteinrichtung (5) aus einem Shared-Medium-Schalter gebildet ist, bei welchem

- den verschiedenen Eingängen (41, 42, ... 4k') dieser dritten Schalteinrichtung (5) zugeführte Signale auf der gemeinsamen Trägerfrequenz (f0) frei wählbar auf jede Frequenz aus einer der Anzahl (k) der Kanäle (11, 12, ...1k) gleichen Anzahl (k) verschiedener vorbestimmter , Frequenzen (f1, f2, ...fk) transformierbar sind, jedes auf eine dieser vorbestimmten Frequenzen (f1, f2, ...fk) transformierte Signal einzeln und/oder in einer Vermischung miteinander leistungsmäßig auf die Ausgänge (401, 402, ...40k) dieser dritten Schalteinrichtung (5) verteilbar ist, und bei welchem
- an jedem dieser Ausgänge (401, 402, ..., 40k) aus einem diesem Ausgang durch die leistungsmäßige Verteilung der Signale zugeteilten Leistungsanteil ein Signal auf einer diesem Ausgang aufgrund einer für diese dritte Schalteinrichtung (5) vorbestimmten Verteilung der vorbestimmten Frequenzen (f1, f2, ..., fk) auf die Ausgänge (401, 402, ..., 40k) dieser dritten Schalteinrichtung (5) fest zugeordneten Frequenz aus den verschiedenen vorbestimmten Frequenzen (f1, f2, ..., fk) selektierbar und dieses selektierte Signal auf die gemeinsame Trägerfrequenz (f0) transformierbar ist.

17. Koppelanornung nach Anspruch 14 oder 15,
**dadurch gekennzeichnet,**
daß der Shared-Medium-Schalter einer ersten oder zweiten Schalteinrichtung (3, 4)

- pro Eingang (21, 22, ..., 2k; 31, 32, .., 3L) dieser ersten oder zweiten Schalteinrichtung (3, 4) je einen eingangsseitigen Frequenzkonverter (61, 62, ..., 6k; 61, 62, ..., 6L) zum Empfang eines diesem Eingang (21, 22, ..., 2k; 31, 32, ..., 3L) zugeführten Signals auf der gemeinsamen Trägerfrequenz (f0) und Umwandeln dieses Signals in ein entsprechendes Signal auf der diesem Eingang fest zugeordneten Frequenz aus den verschiedenen vorbestimmten oder ausgewählten Frequenzen (f1, f2, ..., fk; f1, f2, ..., fL)

- eine Einrichtung (20) zum leistungsmäßigen Verteilen jedes der auf die verschiedenen vorbestimmten oder ausgewählten Frequenzen (f1, f2, ..., fk; f1, f2, ..., fL) transformierten Signale auf die Ausgänge (201, 202, ..., 20k'; 301, 302, ..., 30L) dieser ersten oder zweiten Schalteinrichtung (3, 4) und

- pro Ausgang (201, 202, ..., 20k'; 301, 302, ..., 30L) dieser ersten oder zweiten Schalteinrichtung (3, 4) je einen wahlweise auf jede der verschiedenen vorbestimmten oder ausgewählten Frequenzen (f1, f2, ..., fk; f1, f2, ...fL) abstimmbaren ausgangsseitigen Frequenzkonverter (170) zum Empfang des diesem Ausgang (202, 203, ...20k'; 301, 302, ...30L) aufgrund der leistungsmäßigen Verteilung der Signale zugeteilten Leistungsanteils, Selektieren eines Signals aus diesem Leistungsanteil auf einer Frequenz, auf die der ausgangsseitige Frequenzkonverter (170) gerade abgestimmt ist, und Umwandeln dieses selektierten Signals auf dieser Frequenz in ein entsprechendes Signal auf der Trägerfrequenz (f0) aufweist.

18. Koppelanordnung nach Anspruch 14, **dadurch gekennzeichnet,** daß ein eingangsseitiger Frequenzkonverter (61, 62, ..., 6k; 61, 62, ...6L) des Shared-Medium-Schalters einer ersten oder zweiten Schalteinrichtung (3, 4) einen auf die gemeinsame Trägerfrequenz (f0) abgestimmten Signalempfänger (110) zum Detektieren eines Signals auf dieser Trägerfrequenz (f0) und einen Signalsender (221, 222, ..., 22k; 221, 222,; 2L) zum von dem detektierten Signal abhängigen Erzeugen eines dem detektierten Signal auf der Trägerfrequenz (f0) entsprechenden Signals auf der dem zu diesem Frequenzkonverter (61, 62, ...6k; 61, 62, ...6L) gehörenden Eingang (21, 22, ..., 2k; 21, 22, 23, ...2L) fest zugeordneten Frequenz aufweist.

19. Koppelanordnung nach Anspruch 17 oder 18, **dadurch gekennzeichnet,**
daß ein ausgangsseitiger Frequenzkonverter (170) des Shared-Medium-Schalters einer ersten oder zweiten Schalteinrichtung (3, 4) einen wahlweise auf jede der verschiedenen vorbestimmten Frequenzen (f1, f2, ..., fk) abstimmbaren Signalempfänger (330) zum Detektieren eines Signals auf der Frequenz, auf die der Signalempfänger (330) gerade abgestimmt ist, und einen Signalsender (660) zum von dem detektierten Signal abhängigen Erzeugen eines diesem detektierten Signal auf dieser Frequenz entsprechenden Signals auf der gemeinsamen Trägerfrequenz (f0) aufweist.

20. Koppelanordnung nach einem der Ansprüche 14 bis 19,
**dadurch gekennzeichnet,** daß ein Shared-Medium-Schalter einer dritten Schalteinrichtung (5)

- pro Eingang (41, 42, ..., 4k') dieser Schalteinrichtung (5) je einen einstellbaren eingangsseitigen Frequenzkonverter (180) zum Empfang eines diesem Eingang (41, 42, ..., 4k') zugeführten Signals auf der gemeinsamen Trägerfrequenz (f0) und Umwandeln dieses Signals auf einer für diesen Eingang (41, 42, ..., 4k') frei aus den verschiedenen vorbestimmten Frequenzen (f1, f2, ..., fk) auswählbaren Frequenz,

- eine Einrichtung (20) zum leistungsmäßigen Verteilen jedes der auf die verschiedenen vorbestimmten Frequenzen (f1, f2, ..., fk) transformierten Signale auf die Ausgänge (401, 402, ..., 4k) dieser dritten Schalteinrichtung (5) und

- pro Ausgang (401, 402, ..., 40k) dieser dritten Schalteinrichtung (5) je einen ausgangsseitigen Frequenzkonverter (71, 72, ..., 7k) zum Empfang des diesem Ausgang (401, 402, ..., 40k) aufgrund der leistungsmäßigen Verteilung der Signale zugeteilten Leistungsanteils und Selektieren eines Signals aus diesem Leistungsanteil auf einer diesem Ausgang (401, 402, ..., 40k) aufgrund der vorbestimmten festen Verteilung der verschiedenen Frequenzen (f1, f2, ..., fk) auf die Ausgänge (401, 402, ... 40k) dieser dritten Schalteinrichtung (5) fest zugeordneten Frequenz und Umwandeln dieses selektierten Signals in ein entsprechendes Signal auf der gemeinsamen Trägerfrequenz (f0) aufweist.

21. Koppelanordnung nach Anspruch 20, **dadurch gekennzeichnet,**
daß ein eingangsseitiger Frequenzkonverter (180) des Shared-Medium-Schalters einer dritten Schalteinrichtung (5) einen auf die gemeinsame Trägerfrequenz (f0) abgestimmten Signalempfänger (110) zum Detektieren eines Signals auf dieser Trägerfrequenz (f0) und einen frei auf jede der verschiedenen vorbestimmten Frequenzen (f1, f2, ..., fk) einstellbaren Signalsender (550) zum von dem detektierten Signalabhängigen Erzeugen eines dem detektierten Signal auf der Trägerfrequenz (f0) entsprechenden Signals auf der vorbestimmten Frequenz, auf die dieser Signalsender (550) gerade eingestellt ist, aufweist.

22. Koppelanordnung nach Anspruch 20 oder 21, **dadurch gekennzeichnet,**
daß ein ausgangsseitiger Frequenzkonverter (71, 72, ..., 7k) des Shared-Medium-Schalters der dritten Schalteinrichtung (5) einen auf die dem zu diesem Frequenzkonverter (71, 72, ..., 7k) gehörenden Ausgang (401, 402, ..., 40k) fest zugeordnete Frequenz abgestimmten Signalempfänger (701, 702, ..., 70k) zum Detektieren eines Signals auf dieser festen Frequenz und einen Signalsender (660)zum vom detektierten Signal abhängigen Erzeugen eines dem detektierten Signal auf der festen Frequenz entsprechenden Signals auf der gemeinsamen Trägerfrequenz (f0) aufweist.

# FIG 1

# FIG 1a

EP 0 548 453 A2

# FIG 2

20

# FIG 2a

# FIG 3

# FIG 4

EP 0 548 453 A2

# FIG 5

# FIG 6

23

FIG7